# EUROPÄISCHE PATENTSCHRIFT

(11) **EP 3 713 709 B1**
(45) Veröffentlichungstag und Bekanntmachung des Hinweises auf die Patenterteilung: **24.07.2024**
(21) Anmeldenummer: 18807279.7
(22) Anmeldetag: 19.11.2018
(51) Int. Cl.: B24B 7/18, B24B 27/00, B24B 41/00, B24B 49/08, B24B 49/16

(54) **ANBAUGERÄT SOWIE HANDHABUNGSVORRICHTUNG MIT EINEM ANBAUGERÄT**
ATTACHMENT, AND HANDLING DEVICE COMPRISING AN ATTACHMENT
ÉQUIPEMENT RAPPORTÉ AINSI QUE DISPOSITIF DE MANIPULATION MUNI D'UN ÉQUIPEMENT RAPPORTÉ

(30) Priorität: 20.11.2017 DE 102017127339
(43) Veröffentlichungstag der Anmeldung: 30.09.2020
(73) Patentinhaber: Schwamborn Geraetebau GmbH, 73117 Wangen (DE)
(72) Erfinder: WUERTENBERGER, Christoph, 73117 Wangen/GP (DE)
(74) Vertreter: Witte, Weller & Partner Patentanwälte mbB
(86) Internationale Anmeldenummer: PCT/EP2018/081805
(87) Internationale Veröffentlichungsnummer: WO 2019/097059

(56) Entgegenhaltungen:
- EP-A1- 2 508 680
- EP-A2- 2 960 014
- CN-A- 107 336 098
- DE-A1- 102012 020 303
- US-A1- 2005 064 804
- US-A1- 2015 290 761

## Beschreibung

Die vorliegende Offenbarung bezieht sich auf eine Handhabungsvorrichtung, insbesondere eine mobile Arbeitsmaschine, die ein Fahrwerk, einen Aufbau und einen Ausleger aufweist, wobei am Ausleger ein Anbaugerät zur abtragenden oder glättenden Bearbeitung von Wänden oder Decken aufgenommen ist. Die Offenbarung bezieht sich ferner auf eine Verwendung eines Anbaugerätes mit einer Handhabungsvorrichtung.

Ein Anbaugerät gemäß dem Oberbegriff des Anspruchs 1 ist aus der EP 2 960 014 A2 bekannt. Diese Dokument offenbart eine Schleif- und/oder Fräsvorrichtung zum Abschleifen und/oder Fräsen von Flächen wie Wänden, Decken und Böden oder dergleichen eines Gebäudes bei dessen Sanierung, umfassend einen Schleif-/Fräskopf mit wenigstens einer motorisch antreibbaren Schleifscheibe und/oder Fräse zur abrasiven Bearbeitung der Fläche und/oder der Beschichtung der Fläche, wobei die Schleif- und/oder Fräsvorrichtung einen Schleif- und/oder Fräskopf umfasst, der über eine Ankopplungsvorrichtung an einem Bewegungsarm anbringbar ist.

Die EP 2 960 014 A2 beschreibt in einer Ausgestaltung eine sogenannte Teleskopvorrichtung zwischen dem Schleif-/Fräskopf und der Ankopplungsvorrichtung. Die EP 2 960 014 A2 geht jedoch nicht auf spezifische Gestaltungen einer solchen Teleskopvorrichtung ein. Dies betrifft insbesondere die konkrete Funktion bei der Deckenbearbeitung. Die EP 2 960 014 A2 lehrt, einen aktuellen Anpressdruck mit einem Sensor zu erfassen, um auf dieser Basis den Anpressdruck einzustellen und zu korrigieren. Es hat sich gezeigt, dass dieser Ansatz unter Laborbedingungen funktioniert, aber nicht unbedingt in der praktischen Anwendung. Dies gilt insbesondere dann, wenn das Anbaugerät auf einer Handhabungsvorrichtung montiert ist, die das Anbaugerät nicht beliebig oder gar unendlich steif (unverrückbar) in Bezug auf die zu bearbeitende Oberfläche positionieren und bewegen kann. Es hat sich gezeigt, dass der aus der EP 2 960 014 A2 bekannte Ansatz einen hohen Regelaufwand erforderlich machen würde, und dass insbesondere aufgrund der Trägheit des Systems die Regelung in der Praxis häufig gar nicht schnell genug auf Veränderungen des Anpressdrucks reagieren kann. Schlimmstenfalls kann es zu einem Übersteuern des Gesamtsystems kommen.

Geräte zur abtragenden, glättenden und/oder aufrauenden Bearbeitung im Sinne der vorliegenden Offenbarung sind etwa als Poliermaschinen, Schleifmaschinen und oder Fräsmaschinen zur Bearbeitung ebener Flächen gestaltet. Dies umfasst üblicherweise die Bereitstellung eines Bearbeitungskopfes, der ein Werkzeug oder mehrere Werkzeuge trägt. Die Werkzeuge werden angetrieben, um eine Relativbewegung zwischen den Werkzeugen und der zu bearbeitenden Fläche zu bewirken.

Ein Hauptanwendungsgebiet solcher Maschinen ist die Bodenbearbeitung. Demgemäß sind Maschinen zur Bearbeitung (Schleifen, Polieren, Reinigen, Fräsen, etc.) von Betonböden, Steinböden und sonstigen Untergründen bekannt. Beispielhaft wird in diesem Zusammenhang auf die WO 94/08752 A1 verwiesen, die eine Maschine zur Bearbeitung von Steinböden beschreibt.

Die vorliegende Offenbarung bezieht sich jedoch auf Geräte, welche in erster Linie zur Bearbeitung entsprechender ebener Flächen an Wänden und/oder Decken ausgebildet sind. Im Sinne der vorliegenden Offenbarung soll der Begriff Wand Seitenwände sowie Deckenwände umfassen. Der Begriff Wand bezieht sich jedoch nicht auf einen Boden bzw. eine Bodenfläche.

Es gibt Bestrebungen, Maschinen bereitzustellen, die sich zur abtragenden oder glättenden Bearbeitung von Wänden, also nicht von Böden, eignen. Bei der Bearbeitung von Beton, Estrich, Natursteinen, etc. muss eine gewisse Anpresskraft bzw. ein gewisser Auflagedruck bereitgestellt werden. Nur dann kann das Werkzeug abtragend oder glättend auf den entsprechenden Werkstoff einwirken. Handelsübliche Bearbeitungsköpfe für Maschinen zur Bodenbearbeitung wirken beispielsweise mit einem Auflagegewicht von 80-300 kg auf den Boden. Demgemäß wird der erforderliche Anpressdruck ganz einfach durch das Eigengewicht der Maschine bereitgestellt. Da das Eigengewicht keinen spürbaren Schwankungen unterliegt, ist der Auflagedruck konstant. Dies ist wichtig für die Qualität des Bearbeitungsergebnisses.

Damit erklärt sich auch, dass Maschinen, die für die Bodenbearbeitung ausgelegt sind, nicht für die Bearbeitung von Seitenwänden oder Decken geeignet sind. Man müsste sodann nicht nur das Eigengewicht der Maschine selbst tragen, sondern zusätzlich auch den gewünschten Anpressdruck bereitstellen, und zwar ohne große Schwankungen.

Ein Ansatz geht dahin, die Maschinen als Anbaugerät auszulegen, welches an einem Ausleger einer Handhabungsvorrichtung oder einer mobilen Arbeitsmaschine montierbar ist. In diesem Zusammenhang wird neben der EP 2 960 014 A2 beispielhaft auf die Dokumente WO 2007/141320 A1, DE 10 2006 056 179 A1 sowie FR 2 725 932 A1 verwiesen. Die CN 107 336 098 A, US 2005/064804 A1, DE 10 2012 020303 A1 und die US 2015/290761 A1 offenbaren strukturell ähnliche Anbaugeräte, wobei teilweise auf andere Anwendungen abgestellt wird. Eine exemplarische Gestaltung einer geeigneten Handhabungsvorrichtung, die als mobile Arbeitsmaschine mit Fernsteuerung gestaltet ist, ist aus der EP 2 508 680 A1 bekannt.

Demgemäß sind Anbaugeräte zum Schleifen oder Fräsen von Wänden oder Decken jedenfalls in allgemeiner Form bekannt. Es hat sich jedoch gezeigt, dass in der Praxis noch Nachteile bestehen, wodurch eine Beeinträchtigung der Leistungsfähigkeit und insbesondere der Qualität des Arbeitsergebnisses drohen kann.

Vor diesem Hintergrund liegt der vorliegenden Offenbarung die Aufgabe zugrunde, ein entsprechendes Anbaugerät sowie eine mit einem solchen Anbaugerät versehene Handhabungsvorrichtung anzugeben, die die Bearbeitung von Wänden oder Decken erlauben und bekannte Ausgestaltungen weiterbilden. Vorzugsweise kann die Abtragsleistung und/oder Flächenleistung erhöht werden. Weiter bevorzugt wird eine hohe, gleichbleibende Bearbeitungsqualität gewährleistet. Das Anbaugerät ist möglichst derart gestaltet, dass die Bearbeitung für einen Bediener einfach steuerbar und kontrollierbar ist. Ferner ist das Anbaugerät möglichst derart gestaltet, dass ein universeller Einsatz mit verschiedensten Arten von Handhabungsvorrichtungen, Arbeitsmaschinen, Geräteträgern, etc. möglich ist. Es ist wünschenswert, dass das Anbaugerät möglichst autark gestaltet ist, zumindest betreffend eine Steuerung/Regelung bzw. allgemein einen Informationsaustausch mit einer Steuereinrichtung der Handhabungsvorrichtung. Nach Möglichkeit soll also das Anbaugerät derart gestaltet sein, dass übliche Handhabungsvorrichtung ohne großen Rüstaufwand für die Verwendung des Anbaugerätes ertüchtigt werden können.

Schließlich soll im Rahmen der vorliegenden Offenbarung eine entsprechende Verwendung eines Anbaugerätes zur Bearbeitung von Decken oder Wänden angegeben werden.

Die Aufgabe der Erfindung wird durch eine mit einem Anbaugerät zur abtragenden oder glättenden Bearbeitung von Wänden oder Decken versehene Handhabungsvorrichtung gemäß Anspruch 1 gelöst.

Erfindungsgemäß erlaubt die Kompensationsanordnung nämlich eine einfache Bedienung während der Bearbeitung, ohne dass der Bediener überfordert wird. Es hat sich gezeigt, dass aufwändige Regelungen zu einer komplizierten Bedienung führen, welche in der Praxis nicht akzeptiert wird. Vorzugsweise werden keine Steuerbefehle oder sonstige Informationen zwischen dem Anbaugerät und der Handhabungsvorrichtung ausgetauscht. Mit anderen Worten ist das Anbaugerät zumindest in beispielhaften Ausführungsformen steuerungsautark gestaltet.

Streng genommen müsste nämlich der Bediener einerseits die Handhabungsvorrichtung steuern, welche ihrerseits eine Haltekraft aufzubringen hat, um das Anbaugerät mit dem gewünschten Druck gegen die Wand oder Decke zu pressen. Es hat sich gezeigt, dass eine Handhabungsvorrichtung, die ja auch eine Vorschubbewegung des Bearbeitungskopfes entlang der zu bearbeitenden Fläche erzeugt, die gewünschte Anpresskraft nicht mit der geforderten Genauigkeit und Konstanz bereitstellen kann. Übermäßig hohe Druckschwankungen würden jedoch das Bearbeitungsergebnis beeinträchtigen.

Somit wird gemäß dem obigen Aspekt davon ausgegangen, dass die Handhabungsvorrichtung eine gewisse Haltekraft aufbringt, um das Anbaugerät abzustützen, aber nicht für die Einhaltung der gewünschten Genauigkeit der Anpresskraft verantwortlich ist. Die Kompensationsanordnung beim Anbaugerät selbst sorgt dafür, dass die resultierende Anpresskraft in einem hinreichend kleinen Toleranzbereich liegt. Die Kompensationsanordnung kann also Druckschwankungen, die auf Ortsveränderungen oder sonstige Schwankungen der Haltekraft zurückgehen, in zumindest einem gewissen Arbeitsbereich (Abstandsbereich in Bezug auf die Bearbeitungsfläche) ausgleichen. Vorzugsweise ist der Arbeitsbereich hinreichend groß, so dass in der Praxis bei üblichen Auslenkungen oder Bewegungen zwischen dem Bearbeitungskopf und der Anbauschnittstelle der Handhabungsvorrichtung gleichwohl eine möglichst konstante Anpresskraft vorliegt. Vorzugsweise ist hierfür kein Bedieneingriff des Bedieners direkt am Anbaugerät erforderlich.

Dieser Ansatz sorgt für eine praktikable und verständliche Bedienung und ermöglicht ferner eine möglichst autarke Gestaltung des Anbaugerätes. Das Anbaugerät ist ohne großen Aufwand für die Umrüstung mit verschiedenen Handhabungsvorrichtungen nutzbar. Der Bediener kann sich, abgesehen von einer Grobausrichtung, während der Bearbeitung auf die Vorschubbewegung entlang der zu bearbeitenden Fläche konzentrieren. Lediglich dann, wenn die gegebenen Wegschwankungen größer als der Arbeitsbereich sind, wäre ein Eingriff erforderlich, etwa durch Neuausrichtung der Handhabungsvorrichtung.

Die Handhabungsvorrichtung trägt das Eigengewicht des Anbaugerätes. Die Handhabungsvorrichtung fungiert idealerweise als "steifes" Lager für das Anbaugerät, um entsprechende Gegenkräfte aufzunehmen. Ein "Spiel" in der kinematischen Kette der Handhabungsvorrichtung oder allgemein ein "Nachgeben" der Handhabungsvorrichtung kann durch die Kompensationsanordnung ausgeglichen werden.

Vorzugsweise stellt die Montageeinheit zumindest eine Position zur Deckenbearbeitung sowie eine weitere Position zur Bearbeitung (seitlicher) Wände bereit. Es versteht sich, dass mehr als zwei Positionen bereitgestellt werden können, etwa um eine Bearbeitung rechtsseitiger Wände und linksseitiger Wände ohne ein Umsetzen der Handhabungsvorrichtung zu ermöglichen. Ferner können entsprechende Positionen zur Bearbeitung von Schrägen bereitgestellt werden.

Der Bearbeitungskopf ist mit einem Antrieb versehen oder mit einem Antrieb gekoppelt. Bei dem Antrieb kann es sich um einen elektromotorischen Antrieb oder einen fluidischen Antrieb (Hydraulik oder Pneumatik) handeln. Die Energie für den Antrieb kann dem Anbaugerät über die Handhabungsvorrichtung bereitgestellt werden. Grundsätzlich sind auch verbrennungsmotorische Antriebe vorstellbar.

Das Anbaugerät eignet sich zur Bearbeitung von Beton, Naturstein, Putzmaterial, Gips, usw. Das Anbaugerät kann mit Werkzeugen zum Schleifen, Fräsen, Polieren, Stocken und/oder Reinigen versehen sein. Bei dem Stocken oder der Stocktechnik handelt es sich um ein Verfahren zum Aufrauen von Oberflächen. Auf diese Weise wird eine definierte Profilierung der Oberfläche erzeugt.

Vorzugsweise kann das Anbaugerät über lediglich einen Schalter aktiviert werden. Wenn ein solcher Schalter sowohl die Kompensationsanordnung als auch den Bearbeitungskopf aktiviert, sind vor oder während der Bearbeitung keine weiteren direkten Steuereingriffe durch den Bediener am Anbaugerät erforderlich. Sofern ein aktueller Bearbeitungsmodus (Wand oder Decke bzw. horizontal oder vertikal) und eine Soll-Geschwindigkeit des zumindest einen Werkzeugs am Bearbeitungskopf bekannt sind, genügt eine einfache Aktivierung über einen AN/AUS Schalter. Die Positionssteuerung erfolgt sodann über die Handhabungsvorrichtung ohne direkten Steuereingriff beim Anbaugerät. So kann der Bediener das Anbaugerät mit dem Arbeitskopf etwa in einem bestimmten Abstand von einer Wand (oder Decke) positionieren. Nach Aktivierung des Aktivierungsschalters wird der Bearbeitungskopf angetrieben, ferner wird die Kompensationsvorrichtung aktiviert, die sodann den Bearbeitungskopf mit der gewünschten Anpresskraft gegen die Wand (oder Decke) presst. Dies vereinfacht die Bedienung deutlich. Am Anbaugerät sind wenige Schalter erforderlich, vorzugsweise nur zwei Schalter oder sogar lediglich ein Schalter.

Bei dem definierten Arbeitsbereich handelt es sich vorzugsweise um einen vordefinierten Wegbereich entlang der Längsachse. Die Längsachse definiert eine lokale Längsrichtung des Anbaugerätes. Die Längsachse ist während der Bearbeitung senkrecht zur bearbeiteten Fläche, so dass der Arbeitsbereich einen Abstand bzw. Abstandsbereich zu dieser Fläche beschreibt.

Bei der Handhabungsvorrichtung handelt es sich beispielsweise um eine mobile Arbeitsmaschine mit einer Mehrzahl von Bewegungsachsen und mit einer offenen Kinemathek, an deren Endglied das Anbaugerät aufgenommen ist. Bei der Kinematik kann es sich etwa um eine Mehrzahl zueinander verschwenkbarer Arme handeln. Im Sinne der vorliegenden Offenbarung wird derjenige Abschnitt oder dasjenige Teil, welcher/welches der zu bearbeitenden Fläche näherliegt, als distaler Abschnitt oder distales Teil bezeichnet. Derjenige Abschnitt oder dasjenige Teil, welcher/welches weiter von der zu bearbeitenden Fläche beabstandet ist, wird als proximaler Abschnitt oder proximales Teil bezeichnet. Nachfolgend werden die Begriffe proximal und distal zur Veranschaulichung und Unterscheidung entsprechender Abschnitte bzw. Endbereiche von Teilen und Baugruppen verwendet. Im Sinne der obigen Definition ist das Anbaugerät am distalen Ende der kinematischen Kette der Handhabungsvorrichtung angeordnet.

Bei der Bearbeitung im Sinne der vorliegenden Offenbarung entsteht regelmäßig Abrieb bzw. Abtrag. Dies kann einerseits zur Staubentwicklung führen. Oft ist deshalb eine Staubabsaugung vorgesehen. Ferner ist auch die Nassbearbeitung bekannt, bei der eine Flüssigkeit zur Staubbindung aufgebracht wird. Gleichwohl ist regelmäßig davon auszugehen, dass die unmittelbar bearbeitete Stelle verschmutzt ist, so dass es auch für einen erfahrenen Bediener nicht einfach ist, sofort zu beurteilen, ob die vorliegende Anpresskraft bzw. ob weitere Bearbeitungsparameter günstig gewählt ist/sind. Auch in diesem Zusammenhang ist es von Vorteil, wenn die Kompensationsanordnung die Anpresskraft zumindest in Arbeitsbereich reguliert bzw. ausgleicht.

Gemäß einer beispielhaften Ausgestaltung des Anbaugerätes kompensiert die Kompensationsanordnung im Arbeitsbereich Positionsveränderungen der Anbauschnittstelle der Handhabungsvorrichtung entlang der Längsachse. Der Arbeitsbereich kann einen bestimmten Weg umfassen, etwa ausgehend von einer Neutralstellung (NullStellung) jeweils eine definierte Wegabweichung in beide Richtungen. Beispielhaft umfasst der Arbeitsbereich 250 mm, wobei ausgehend von einer Neutralstellung jeweils 125 mm für entsprechende Wegschwankungen in beide Richtungen vorgesehen sind. Aufgabe der Kompensationsanordnung ist es somit, auch im Falle einer Wegschwankung gleichwohl eine hinreichend hohe und möglichst konstante Anpresskraft bzw. einen entsprechenden Anpressdruck bereitzustellen.

Mit anderen Worten ist die Kompensationsanordnung in einer beispielhaften Ausführungsform dazu ausgestaltet, in einem Arbeitsbereich von etwa 250 mm ein im Wesentlichen konstante oder konstante Anpresskraft zu gewährleisten. Der Arbeitsbereich liegt beispielsweise in einem Bereich von 250 mm +/- 25 mm.

Im Arbeitsbereich des Anbaugerätes sind der Kompensationsanordnung sind Ausgleichsbewegungen entlang der Längsachse von betragsmäßig mindestens 200 mm ermöglicht. Gemäß einer weiteren Ausgestaltung sind Ausgleichsbewegungen von betragsmäßig mindestens 300 mm ermöglicht. Gemäß einer weiteren Ausgestaltung sind Ausgleichsbewegungen von betragsmäßig mindestens 400 mm ermöglicht. Die Werte verstehen sich jeweils als Summe der Abweichungen in beide Richtungen, ausgehend von der Neutralstellung.

Der Bediener richtet die Handhabungsvorrichtung derart aus, dass sich das Anbaugerät möglichst in der Neutralstellung der Kompensationsanordnung befindet. Wenn in dieser Stellung mit der Bearbeitung begonnen wird, steht genügend Kompensationsraum für mögliche Ausgleichsbewegungen zur Verfügung. Das Ziel ist die Bereitstellung einer möglichst konstanten Anpresskraft.

Gemäß einer weiteren beispielhaften Ausgestaltung des Anbaugerätes ist die Kompensationsanordnung in einem ersten Betriebsmodus und zumindest einem zweiten Betriebsmodus betreibbar, wobei der erste Betriebsmodus eine vertikale Orientierung der Längsachse und der zumindest eine zweite Betriebsmodus eine horizontale Orientierung der Längsachse berücksichtigt (bzw. dafür ausgelegt ist). In einem weiteren Betriebsmodus kann ebenso eine horizontale Orientierung der Längsachse vorliegen, wobei das Anbaugerät um 180° verschwenkt ist. Der weitere (zweite) Betriebsmodus für dafür ausgelegt. Auf diese Weise kann eine rechte Wand bzw. eine linke Wand bearbeitet werden.

Hierbei ist anzumerken, dass bei vertikaler Orientierung zur Deckenbearbeitung das Eigengewicht in anderer Weise wirkt als bei horizontaler Orientierung zur Bearbeitung seitlicher Wände. Dies muss bei der Bereitstellung der gewünschten Anpresskraft entsprechend berücksichtigt werden. Es geht also nicht nur darum, das Anbaugerät zu Verschwenken. Zumindest die Kompensationsanordnung sollte sodann an die gegebene Orientierung angepasst werden, etwa durch Wahl einer entsprechenden Betriebsart. Ein denkbarer Zielwert für den Anpressdruck bzw. die Anpresskraft kann etwa 750-1800 N (Newton) betragen, unabhängig von der Orientierung.

Gemäß einer weiteren beispielhaften Ausgestaltung des Anbaugerätes wird die Kompensationsanordnung derart geregelt, dass im Arbeitsbereich eine im Wesentlichen konstante Anpresskraft bereitsteht. Dies gilt jedenfalls für übliche Anwendungsfälle ohne bewusste oder unbewusste Fehlbedienung. Gemäß einem Ausführungsbeispiel schwankt eine resultierende Anpresskraft im Arbeitsbereich um maximal 15 %. Gemäß einem weiteren Ausführungsbeispiel schwankt die resultierende Anpresskraft im Arbeitsbereich um maximal 10 %. Gemäß einem weiteren Ausführungsbeispiel schwankt die resultierende Anpresskraft im Arbeitsbereich um maximal 5 %. Mit anderen Worten kann die Kompensationsanordnung auch bei deutlichen Ausgleichsbewegungen eine hinreichend konstante Anpresskraft bewirken.

Sofern im Rahmen dieser Offenbarung von einer definierten Anpresskraft die Rede ist, so kann hierunter auch ein definierter Toleranzbereich bzw. Schwankungsbereich verstanden werden. Es versteht sich im Kontext der Anwendung, dass es nicht um absolute Genauigkeit geht, sondern darum, ein gleichbleibendes Arbeitsergebnis ohne größere Schwankungen zu ermöglichen.

Gemäß einer weiteren beispielhaften Ausgestaltung des Anbaugerätes umfasst die Kompensationsanordnung zumindest einen Arbeitszylinder, der sich in der Längsrichtung erstreckt, wobei der Arbeitszylinder an eine Druckmittelversorgung der Handhabungsvorrichtung anschließbar ist, und wobei die Regelung eines Ist-Drucks im Arbeitszylinder bei gegebenem Versorgungsdruck durch eine Druckregelung erfolgt, die beim Anbaugerät selbst vorgesehen ist. Bei Wegschwankungen, die sich entsprechend auf die Stellung des Arbeitszylinders auswirken, sorgt die integrierte Druckregelung dafür, dass das gewünschte Druckniveau bzw. das Kraftniveau beim Bearbeitungskopf beibehalten wird. Der Arbeitszylinder erstreckt sich beispielsweise zwischen einem proximalen Ende und einem distalen Ende der Kompensationsanordnung.

Es ist nicht erforderlich, diese Regelung an die Handhabungsvorrichtung auszulagern. Stattdessen genügt es, wenn die Handhabungsvorrichtung einen bestimmten Eingangsdruck bereitstellt, wobei Druckschwankungen im bereitgestellten Systemdruck (Versorgungsdruck) im Anbaugerät durch geeignete Bauteile (Druckminderer oder dergleichen) nivelliert werden.

Ferner wird der Bediener von der Aufgabe der Kontrolle und gegebenenfalls Nachregelung des Drucks befreit. Eine Druckregelung beim Anbaugerät sorgt dafür, dass unabhängig von der aktuellen Stellung des Arbeitszylinders, zumindest im Arbeitsbereich, möglichst dasselbe Druckniveau anliegt, um die gewünschte Anpresskraft bereitzustellen. Dies heißt mit anderen Worten, es ist auch nicht erforderlich, die Handhabungsvorrichtung permanent neu auszurichten, um etwaige Wegschwankungen in der Längsrichtung auszugleichen. Dies wäre gegebenenfalls dann erforderlich, wenn vorhandene Schwankungen oder Abweichungen größer als der gegebene Arbeitsbereich sind.

Gemäß einer weiteren beispielhaften Ausgestaltung des Anbaugerätes umfasst die Kompensationsanordnung ferner eine Längsführung für den Bearbeitungskopf, die unabhängig von einer aktuellen Orientierung des Anbaugerätes eine Bewegung des Bearbeitungskopfes in der Längsrichtung führt. Beispielhaft ist die Längsführung als Rollenführung ausgestaltet. Die Führung ist reibungsgünstig gestaltet. Wenn eine separate Führung gegeben ist, liegt die Führungsaufgabe nicht oder nicht allein beim Arbeitszylinder. Etwaige (seitliche) Führungskräfte, die auf den Arbeitszylinder einwirken, können minimiert werden. Die Längsführung sorgt für eine Zwangsführung in der Längsrichtung. Vorzugsweise ist die Längsführung als geschlossene Führung gestaltet, so dass unabhängig von einer aktuellen Orientierung des Anbaugerätes die Führungsfunktion gewährleistet ist.

Gemäß einer weiteren beispielhaften Ausgestaltung des Anbaugerätes umfasst die Längsführung einen Führungsrahmen, in dem ein relativ zum Führungsrahmen verfahrbarer Profilschlitten aufgenommen ist, der sich am Führungsrahmen abstützt, wobei der Bearbeitungskopf an einem Ende des Profilschlittens aufgenommen ist.

Mit anderen Worten ist eines der beiden relativ zueinander beweglichen Führungsteile mit dem Bearbeitungskopf gekoppelt. Das andere Führungsteil ist mit der Montageeinheit gekoppelt. Somit ist zwischen dem Bearbeitungskopf und der Montageeinheit eine Bewegung entlang der Längsachse ermöglicht. Beispielweise umfasst der Arbeitszylinder ein Zylindergehäuse sowie eine im Zylindergehäuse aufgenommene Kolbenstange. Beispielweise ist die Kolbenstange mit dem Bearbeitungskopf gekoppelt. Demgemäß ist das Zylindergehäuse mit der Montageeinheit gekoppelt. Eine umgekehrte Zuordnung ist gleichwohl auch denkbar. Die Kompensationsanordnung kann auch als Teleskopführung oder teleskopierbare Kompensationsanordnung bezeichnet werden.

Beispielhaft umfasst die Führung ein Schlittenprofil bzw. einen Schlitten, der rollengeführt bzw. rollengelagert ist. Eine denkbare Gestaltung der Längsführung beinhaltet Führungsbahnen an den Längskanten des Schlittenprofils, wobei die Wälzkörper oder Rollen mit entsprechenden V-Nuten oder U-Nuten versehen sind, die die Kanten des Schlittenprofils kontaktieren. Demgemäß kann das Schlittenprofil umfänglich vier Kanten aufweisen, an denen entsprechende Wälzkörper oder Rollen angeordnet sind. Damit wird die Führungsfunktion unabhängig von der aktuellen Orientierung des Anbaugerätes gewährleistet.

Gemäß einer weiteren beispielhaften Ausgestaltung des Anbaugerätes weist die Kompensationsanordnung ferner einen visuellen Indikator zur Veranschaulichung einer aktuellen Arbeitsposition des Bearbeitungskopfes im Arbeitsbereich auf. Der visuelle Indikator ist optisch für den Bediener gut wahrnehmbar am Anbaugerät angebracht. Es kann sich dabei ganz einfach um einen Zeiger handeln, dem eine Skala zugeordnet ist, die beispielsweise den Arbeitsbereich widerspiegelt. Beispielsweise weist das Anbaugerät an zwei oder mehr Seiten entsprechende Zeiger auf, so dass unabhängig von einer aktuellen Orientierung des Anbaugerätes die Wahrnehmung des Indikators gewährleistet ist.

Auch diese Maßnahme hat den Vorteil, dass kein Informationsaustausch mit der Handhabungsvorrichtung erforderlich ist, um den Bediener die Information bereitzustellen. Beispielhaft kann die Skala neben quantitativen Informationen (etwa die Länge und Unterteilung des Arbeitsbereichs) auch qualitative Informationen enthalten, beispielsweise eine Farbcodierung. So kann beispielsweise die Farbe Grün einen mittleren Bereich der Skala kennzeichnen, in dem sich die Neutralstellung befindet. In Richtung auf die beiden Ränder der Skala kann beispielsweise ein Farbwechsel über Gelb hin zu Rot erfolgen. Wenn sich der Zeiger im roten Bereich befindet, veranlasst dies den Bediener, eine Neupositionierung der Handhabungsvorrichtung vorzunehmen, oder in sonstiger Weise auf die Handhabungsvorrichtung bzw. das Anbaugerät einzuwirken.

Umgekehrt kann der Indikator dem Bediener dahingehend Rückmeldung geben, dass die Bearbeitung der Wand oder der Decke ordnungsgemäß abläuft, und dass sich die Anpresskraft im erforderlichen Rahmen bewegt.

Gemäß einer weiteren beispielhaften Ausgestaltung des Anbaugerätes ist der Bearbeitungskopf über eine Gelenkanordnung mit einem Ende der Kompensationsanordnung verbunden. Beispielhaft ist zumindest ein Vorspannelement vorgesehen, das den Bearbeitungskopf in Richtung auf eine Soll-Orientierung drängt. Die Gelenkanordnung sorgt dafür, dass der Bearbeitungskopf möglichst parallel zur zu bearbeitenden Fläche ausgerichtet ist. Die Gelenkanordnung ist am distalen Ende der Kompensationsanordnung angeordnet.

Durch die Anpresskraft bzw. den Anpressdruck erfolgt die Ausrichtung des Bearbeitungskopfes. Gleichwohl können Vorspannelemente, etwa Federn in Form von Zugfedern, dazu beitragen, dass der Bearbeitungskopf auch dann günstig in Bezug auf die Längsachse positioniert ist, wenn kein Kontakt mit dem zu bearbeitenden Abschnitt besteht.

Gemäß einer weiteren beispielhaften Ausgestaltung des Anbaugerätes ist die Gelenkanordnung als kardanische Gelenkanordnung gestaltet, die zwei Schwenkachsen bereitstellt, die senkrecht zueinander und senkrecht zur Längsachse orientiert sind. In einer beispielhaften Ausgestaltung schneiden sich die beiden Schwenkachsen, wobei auch die Längsachse die Schwenkachsen schneidet. Die kardanische Aufhängung des Anbaugerätes ermöglicht in einfacher Weise gegebenenfalls erforderliche Ausgleichsbewegungen zur Gewährleistung der gewünschten parallelen Auflage des Bearbeitungskopfes.

Gemäß einer weiteren beispielhaften Ausgestaltung weist die Handhabungsvorrichtung Folgendes auf:
- eine Druckmittelversorgungseinheit, und
- eine Steuereinrichtung,
   wobei die Kompensationsanordnung über die Druckmittelversorgungseinheit mit einem Druckmittel versorgt wird,
   wobei die Steuereinrichtung dazu ausgestaltet ist, das Anbaugerät in einer definierten Orientierung relativ zu einer Wand oder Decke zu führen und während einer Vorschubbewegung des Anbaugerätes entlang der Wand oder Decke, die durch Bedienerbefehle gesteuert wird, die Anbauschnittstelle in einem definierten Abstandbereich von der Wand oder Decke zu positionieren, und
   wobei die Kompensationsanordnung die Anpresskraft für den Bearbeitungskopf in Richtung auf die zu bearbeitende Oberfläche bereitstellt und sich das Anbaugerät dabei an der Handhabungsvorrichtung abstützt.

Auch auf diese Weise wird die Aufgabe der Erfindung vollkommen gelöst.

Die Handhabungsvorrichtung ist beispielsweise als mobile Arbeitsmaschine gestaltet, etwa als mobiles Baugerät. Beispielweise ist die Handhabungsvorrichtung als fernsteuerbare oder fernbedienbare mobile Arbeitsmaschine mit eigenem Fahrantrieb gestaltet. Eine derartige Vorrichtung ist grundsätzlich einem Hydraulik-Bagger ähnlich gestaltet, wobei direkt bei der Vorrichtung kein Führerstand oder Führerhaus vorgesehen ist. Stattdessen erfolgt die Bedienung über eine separate Bedieneinheit, die kabellos oder kabelgebunden mit der Vorrichtung verbunden ist. Der Antrieb erfolgt regelmäßig elektrohydraulisch, obgleich andere Antriebsarten denkbar sind. Aufgrund ihrer Kompaktheit und dank des Verzichts auf Verbrennungsmotoren können derartige Maschinen auch innerhalb von Gebäuden eingesetzt werden.

Die Handhabungsvorrichtung dient also nicht nur dazu, das Anbaugerät zu halten und zu positionieren. Ferner stellt die Handhabungsvorrichtung auch eine Gegenkraft oder Haltekraft bereit, um die durch die Kompensationsanordnung aufgebrachte Anpresskraft abzustützen. Idealerweise ist die Handhabungsvorrichtung mit dem Aufbau und dem Ausleger hochsteif und unnachgiebig positionierbar, so dass eine hohe Haltekraft bereitsteht. Die Praxis zeigt jedoch, dass regelmäßig ein gewisses Spiel bzw. eine gewisse Nachgiebigkeit gegeben ist/sind.

Aus diesem Grund kann allein über die Handhabungsvorrichtung nicht die gewünschte Konstanz der Anpresskraft sichergestellt werden. Demgemäß ist es von Vorteil, mit der Kompensationsanordnung eine Art "Puffer" vorzusehen, der dem Bearbeitungskopf und der Handhabungsvorrichtung zwischengeschaltet ist.

Das Fahrwerk umfasst Ketten oder Räder. Die Druckmittelversorgungseinheit umfasst beispielsweise eine integrierte Pumpe. Alternativ oder zusätzlich kann die Druckmittelversorgungseinheit mit einem entsprechenden Druckspeicher versehen sein. Über entsprechende Anschlüsse für Anbaugeräte können diese mit einem entsprechenden Druckmittel (Hydrauliköl) versorgt werden.

In einem beispielhaften Ausführungsbeispiel ist der Aufbau gegenüber dem Fahrwerk um eine vertikal orientierte Achse verdrehbar. Üblicherweise umfasst der Ausleger eine Mehrzahl von Schwenkarmen, die in Reihe angeordnet sind und eine kinematische Kette (offene kinematische Kette) bilden. Demgemäß ähnelt der Aufbau mit dem Ausleger etwa einem Knickarmroboter. Verglichen mit einem Knickarmroboter gibt es jedoch zumindest in einigen Ausführungsbeispielen die Einschränkung, dass zwischen den Schwenkarmen vorrangig horizontal orientierte Schwenkachsen vorgesehen sind, die parallel zueinander orientiert sind. Dies ist jedoch nicht einschränkend zu verstehen.

Gemäß einer weiteren beispielhaften Ausgestaltung der Handhabungsvorrichtung ist der Aufbau gegenüber dem Fahrwerk verdrehbar, wobei der Ausleger einen ersten Armabschnitt, einen zweiten Armabschnitt und einen dritten Armabschnitt aufweist, die eine offene Kette bilden und relativ zueinander verschwenkbar sind, wobei der ersten Armabschnitt verschwenkbar am Aufbau aufgenommen ist, wobei der dritte Armabschnitt die Anbauschnittstelle trägt, die verschwenkbar am dritten Armabschnitt aufgenommen ist, wobei die Schwenkachsen der Armabschnitte des Auslegers jeweils parallel zueinander und senkrecht zur Drehachse des Aufbaus gegenüber dem Fahrwerk orientiert sind, und wobei den Schwenkachsen Antriebe zugeordnet sind, die über die Steuereinrichtung steuerbar sind. Bei den Antrieben handelt es sich beispielsweise um entsprechende Zylinder. Es versteht sich, dass bedarfsweise auch Einrichtungen zur Positionsbestimmung und Positionsüberwachung vorgesehen sind.

Gemäß einer weiteren beispielhaften Ausgestaltung der Handhabungsvorrichtung ist die Anbauschnittstelle um eine Schwenkachse verschwenkbar, um eine parallele Orientierung des Bearbeitungskopfes relativ zur Wand oder Decke zu gewährleisten. Diese Schwenkbewegung kann relativ zum dritten Armabschnitt erfolgen. Somit kann die gewünschte Orientierung parallel zur zu bearbeitenden Fläche unabhängig von einer aktuellen Stellung/Orientierung des Auslegers gewährleistet werden. Die Steuereinrichtung ist beispielhaft dazu ausgebildet, in einem Horizontalmodus durch Schwenkbewegungen um die (horizontale) Schwenkachse relativ zum dritten Armschnitt eine horizontale Orientierung des Bearbeitungskopfes zu gewährleisten. Beispielhaft ist dann die Längsachse des Anbaugerätes senkrecht hierzu, also vertikal orientiert. Dieser Modus eignet sich beispielsweise zur Deckenbearbeitung.

Gemäß einer weiteren beispielhaften Ausgestaltung der Handhabungsvorrichtung ist die Steuereinrichtung zumindest in einem Horizontalmodus oder einem Vertikalmodus betreibbar, wobei die Steuereinrichtung im Horizontalmodus die Antriebe der Handhabungsvorrichtung derart ansteuert, dass das Anbaugerät entlang eines horizontalen Pfades verfahren wird (verfahrbar ist), und wobei die Steuereinrichtung im Vertikalmodus die Antriebe der Handhabungsrichtung derart ansteuert, dass das Anbaugerät entlang eines horizontalen Pfades verfahren wird (verfahrbar ist).

Gemäß einer weiteren beispielhaften Ausgestaltung ist die Steuereinrichtung ferner dazu ausgebildet, im Horizontalmodus Bewegungen des Anbaugerätes in einer Horizontalebene zu ermöglichen. Alternativ oder zusätzlich ist die Steuereinrichtung dazu ausgebildet, im Vertikalmodus Bewegungen des Anbaugerätes in einer Vertikalebene zu ermöglichen.

Hintergrund dieser Ausgestaltungen ist die Vereinfachung der Bedienung der Handhabungsvorrichtung im Kontext der Bearbeitungsaufgabe und der üblichen Anwendungsfälle des Anbaugerätes. Die Bearbeitung der Wände oder Decken erfolgt üblicherweise dergestalt, dass eine mäandernde Linie, Zickzack-Linie oder Schlangenlinie abgefahren wird, um die Fläche vollständig und in möglichst kurzer Zeit zu bearbeiten. Hierbei soll nach Möglichkeit eine möglichst gleichmäßige Bearbeitung stattfinden. Die Verweildauer des Bearbeitungskopfes in jedem Flächenabschnitt soll möglichst gleich sein.

Eine Handhabungsvorrichtung, die gemäß den oben beschriebenen Ausführungsformen gestaltet ist, bietet grundsätzlich eine höhere Anzahl an Freiheitsgraden für die Bewegung an, als dies für die gewünschte Bearbeitung ebener Flächen mit möglichst paralleler Orientierung des Bearbeitungskopfes zur Fläche erforderlich wäre.

Gemäß der vorstehenden Ausführungsform wird die Steuereinrichtung der Handhabungsvorrichtung derart betrieben, dass im Ergebnis Freiheitsgrade gesperrt werden. Mit anderen Worten wird eine verringerte Anzahl von Freiheitsgraden "simuliert", die die Bewegung in den gewünschten Ebenen erlauben, aber keine Abweichungen hiervon. Idealerweise kann der Bediener, nachdem er das Anbaugerät mit dem Bearbeitungskopf einmal in die gewünschte Ausgangslage (parallele Ausrichtung sowie Kontakt des Bearbeitungskopfes mit der Fläche) gebracht hat, das Anbaugerät nur noch zweidimensional bewegen, also in der gewünschten Bearbeitungsebene. Die Steuereinrichtung setzt entsprechende Steuerbefehle in Bewegungen der Glieder der kinematischen Kette um. Eine Bewegung entlang einer Ebene erfordert somit die Nutzung eine Mehrzahl von Bewegungsachsen, die derart zusammenwirken, dass eine vermeintlich einfache Bewegung in der gewünschten Ebene erfolgt.

Dies ist bei der vorstehend beschriebenen Ausführungsform einer Handhabungsvorrichtung mit einem Ausleger mit mehreren Armabschnitten und horizontal verlaufenden Schwenkachsen zwischen den Armabschnitten insbesondere für die Bearbeitung von Decken entlang sich im Wesentlichen horizontal erstreckender Ebenen von Bedeutung. Wenn nun die Steuereinrichtung derart betreibbar ist, dass die aktuelle Höhenposition (vertikale Position) und die aktuelle Ausrichtung des Anbaugerätes steuerungstechnisch "gesperrt" werden kann, so vereinfacht sich die weitere Bedienung betreffend den Vorschub entlang des gewünschten Bewegungspfades des deutlich.

Im Horizontalmodus bzw. im Vertikalmodus sind somit "virtuelle" Ebenen definiert, in denen der Bearbeitungskopf mit der gewünschten Ausrichtung durch einfache Bedienerbefehle bewegt werden kann. Der Bediener kann in einfacher Weise "virtuelle" Achsen oder Richtungsangaben wie hoch/runter sowie rechts/links für die Bearbeitung seitlicher Wände bzw. rechts/links sowie vorwärts/rückwärts für die Bearbeitung von Decken nutzen. Die Eingabe kann einfach an einer Bedieneinheit erfolgen, etwa durch einen Joystick. Die Umsetzung in entsprechende Bewegungen der Glieder der kinematischen Kette der Handhabungsvorrichtung erfolgt durch die Steuereinrichtung.

Auch diese Maßnahmen tragen dazu bei, den Anpressdruck in dem gewünschten Zielbereich zu halten. Müsste der Bediener die Handhabungsvorrichtung entlang sämtlicher verfügbarer Achsen händisch steuern, so würde dies ausgeprägte Schwankungen beim Anpressdruck mit sich bringen.

Gemäß einem weiteren Aspekt bezieht sich die vorliegende Offenbarung auf eine Verwendung eines Anbaugerätes gemäß Anspruch 15. Mit anderen Worten gibt es während des Betriebs zumindest in beispielhaften Ausführungsformen keinen Informationsaustausch zwischen dem Anbaugerät und der Handhabungsvorrichtung. Die Handhabungsvorrichtung hält und positioniert das Anbaugerät. Ferner stellt die Handhabungsvorrichtung ein Druckmittel bereit, das beispielsweise für die Steuerung eines Arbeitszylinders der Kompensationsanordnung des Anbaugerätes genutzt wird. Darüber hinaus gibt es jedoch von Seiten der Handhabungsvorrichtung keine Steuereingriffe oder Regeleingriffe in den Betrieb der Kompensationsanordnung.

Beispielsweise benötigt das Anbaugerät selbst nach erfolgter Aktivierung während der Bearbeitung keine unmittelbaren Steuerbefehle vom Bediener. Auf diese Weise kann das Anbaugerät steuerungsautark betrieben werden. Das Anbaugerät wird nicht energieautark betrieben, da die Energieversorgung über die Handhabungsvorrichtung erfolgt. Hierbei kann es sich um elektrische oder fluidische Energie handeln. Insbesondere der Antrieb des Bearbeitungskopfes kann ein Elektromotor oder einen fluidischen Antrieb umfassen.

Gemäß einem weiteren Aspekt bezieht sich die vorliegende Offenbarung auch auf ein Verfahren zum Betreiben einer mobilen Handhabungsvorrichtung, insbesondere einer mobilen Arbeitsmaschine, zur abtragenden oder glättenden Bearbeitung von Wandflächen oder Deckenflächen, wobei die Handhabungsvorrichtung gemäß zumindest einen der hierin beschriebenen Ausführungsbeispiele gestaltet ist und ein Anbaugerät gemäß zumindest einem der hierin beschriebenen Ausführungsbeispiele trägt. Der Betrieb der Handhabungsvorrichtung kann, wie vorstehend bereits ausgeführt, einen Betrieb der Steuereinrichtung in einem Vertikalmodus oder einem Horizontalmodus umfassen, so dass erlaubte Bewegungsebenen für das Anbaugerät gegeben sind. Dies kann den Bediener deutlich entlasten, da ihm gewissermaßen nur diejenigen Freiheitsgrade angeboten werden, die für die aktuelle Bearbeitung tatsächlich erforderlich sind.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung, wie durch die Ansprüche definiert, zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine Seitenansicht einer beispielhaften Ausführungsform einer Handhabungsvorrichtung, die als mobile Arbeitsmaschine ausgebildet ist;
- Fig. 2: eine perspektivische Ansicht einer Ausführungsform eines Anbaugerätes;
- Fig. 3: eine Seitenansicht einer Handhabungsvorrichtung gemäß Fig. 1, die mit einem Anbaugerät gemäß Fig. 2 bestückt ist, in einer Konfiguration zur Bearbeitung von Decken,
- Fig. 4: eine Anordnung eines Anbaugerätes aus Sicht einer Geräteschnittstelle einer Handhabungsvorrichtung, wobei verschiedene Orientierungen des Anbaugerätes angedeutet sind;
- Fig. 5: eine perspektivische Ansicht eines Raumes zur Veranschaulichung denkbarer Bearbeitungsflächen;
- Fig. 6: eine Seitenansicht des Anbaugerätes gemäß Fig. 2;
- Fig. 7: eine weitere Seitenansicht der Anordnung gemäß Fig. 6, wobei aus Veranschaulichungsgründen Komponenten ausgeblendet sind; und
- Fig. 8: eine perspektivische Ansicht des Anbaugerätes gemäß Fig. 6 und Fig. 7 in einem teilweise explodierten Zustand.

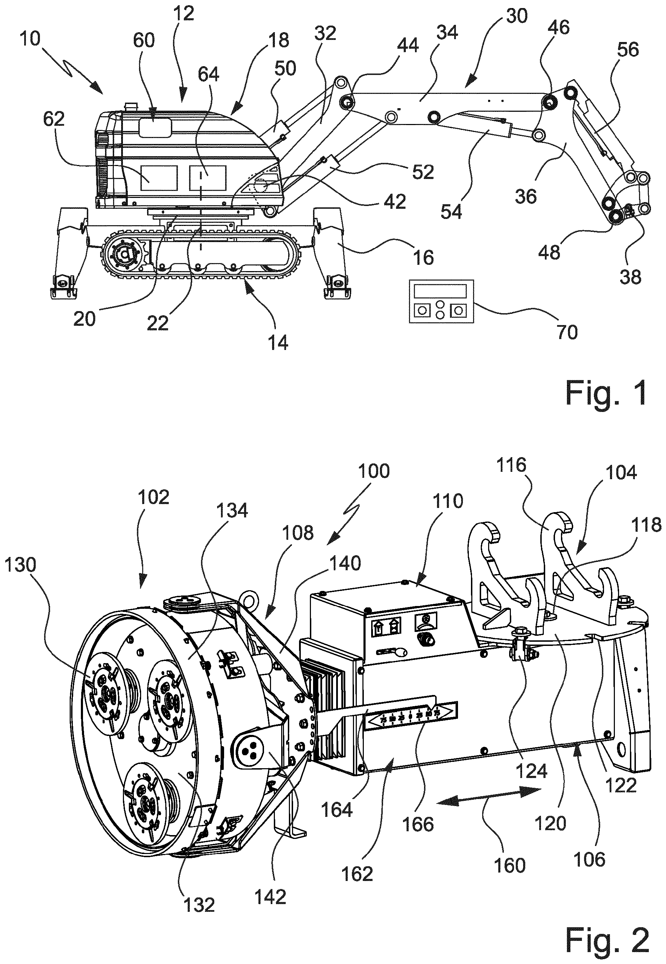

Fig. 1 veranschaulicht anhand einer Seitenansicht eine beispielhafte Gestaltung einer insgesamt mit 10 bezeichneten Handhabungsvorrichtung. Im Ausführungsbeispielgemäß Fig. 1 ist die Handhabungsvorrichtung 10 als mobile Arbeitsmaschine 12 ausgeführt.

Die Handhabungsvorrichtung 10 weist ein Fahrwerk 14 auf, das im Ausführungsbeispiel gemäß Fig. 1 als Raupenfahrwerk oder Kettenfahrwerk gestaltet ist. Es versteht sich, dass das Fahrwerk 14 auch Räder aufweisen kann. Ferner weist die Handhabungsvorrichtung 10 mit 16 bezeichnete Stützen auf, die während der Nutzung der Handhabungsvorrichtung 10 ausgefahren werden können. Mit anderen Worten kann die Handhabungsvorrichtung 10 bedarfsweise aufgebockt werden.

Das Fahrwerk 14 trägt ferner einen Aufbau 18, der beispielsweise gegenüber dem Fahrwerk 14 bzw. den Stützen 16 verdrehbar ist. Zu diesem Zweck ist beispielsweise zwischen dem Fahrwerk 14 und dem Aufbau 18 ein Drehwerk oder Drehkranz 20 vorgesehen, der eine vertikal orientierte Drehachse 22 für den Aufbau 18 definiert. Dem Drehkranz 20 ist ein geeigneter Drehantrieb zugeordnet.

Der Aufbau 18 trägt einen Ausleger 30, der als Knickarmausleger gestaltet ist. Der Ausleger 30 umfasst Armabschnitte 32, 34, 36. Der Armabschnitt 32 ist am Aufbau 18 aufgenommen. Der Armabschnitt 34 ist zwischen den Armabschnitten 32, 36 angeordnet. Der Armabschnitt 36 ist vom Aufbau 18 abgewandt bzw. entfernt angeordnet. Der Armabschnitt 32 kann auch als proximaler Armabschnitt 32 bezeichnet werden. Der Armabschnitt 36 kann auch als distaler Armabschnitt 36 bezeichnet werden. Der Armabschnitt 36 trägt eine Geräteschnittstelle oder Anbauschnittstelle 38. An der Anbauschnittstelle 38 können Anbaugerät aufgenommen werden.

Der Armabschnitt 32 ist über eine Schwenkachse 42 verschwenkbar am Aufbau 18 gelagert. Der Armabschnitt 34 ist über eine Schwenkachse 44 verschwenkbar am Armabschnitt 32 gelagert. Der Armabschnitt 36 ist über eine Schwenkachse 46 verschwenkbar am Armabschnitt 34 gelagert. Die Anbauschnittstelle 38 ist über eine Schwenkachse 48 verschwenkbar am Armabschnitt 36 gelagert. Ausgehend von dem Fahrwerk 14 bilden der Aufbau 18, die Armabschnitte 32, 34, 36 sowie die Anbauschnittstelle 38 eine lineare, offene kinematische Kette. Die Achsen 42, 44, 46 und 48 sind parallel zueinander und jeweils senkrecht zur Achse 22 orientiert.

Zur Bewegung des Armabschnitts 32 relativ zum Aufbau 18 ist ein Zylinder 50 vorgesehen. Zur Bewegung des Armabschnitts 34 relativ zum Armabschnitt 32 ist ein Zylinder 52 vorgesehen. Zur Bewegung des Armabschnitts 36 relativ zum Armabschnitt 34 ist ein Zylinder 54 vorgesehen. Zur Bewegung der Anbauschnittstelle 38 relativ zum Armabschnitt 36 ist ein Zylinder 56 vorgesehen.

In Fig. 1 ist ferner mit 60 eine Steuereinrichtung der Handhabungsvorrichtung 10 angedeutet. Die Steuereinrichtung 60 steuert den Betrieb der Handhabungsvorrichtung 10. Ferner ist eine mit 62 bezeichnete Antriebseinheit vorgesehen, insbesondere eine elektrohydraulische Antriebseinheit. Daneben ist eine Druckmittelversorgungseinheit 64 vorgesehen. Die Druckmittelversorgungseinheit 64 umfasst zumindest eine Pumpe oder einen Druckspeicher zur Bereitstellung eines Druckmittels. Bei dem Druckmittel handelt es sich um ein geeignetes Fluid, etwa um Hydrauliköl.

Ferner ist in Fig. 1 eine Bedieneinheit 70 dargestellt, bei der es sich im Ausführungsbeispiel um eine Fernbedienung handelt. Die Bedieneinheit 70 ist kabelgebunden oder kabellos mit der Steuereinrichtung 60 der Handhabungsvorrichtung 10 verbunden. Über die Bedieneinheit 70 kann ein Bediener die Handhabungsvorrichtung 10 steuern. Gemäß der beispielhaften Ausführungsform gemäß Fig. 1 ist unmittelbar beim Aufbau 18 kein Bedienerpult, Führerstand oder dergleichen vorgesehen. Die Fernbedienbarkeit der Handhabungsvorrichtung 10 hat den Vorteil, dass der Bediener die Handhabungsvorrichtung 10 aus sicherer Entfernung steuern kann. Darüber hinaus kann sich der Bediener frei positionieren, um eine gute Übersicht über die aktuelle Anwendung der Handhabungsvorrichtung 10 zu erlangen.

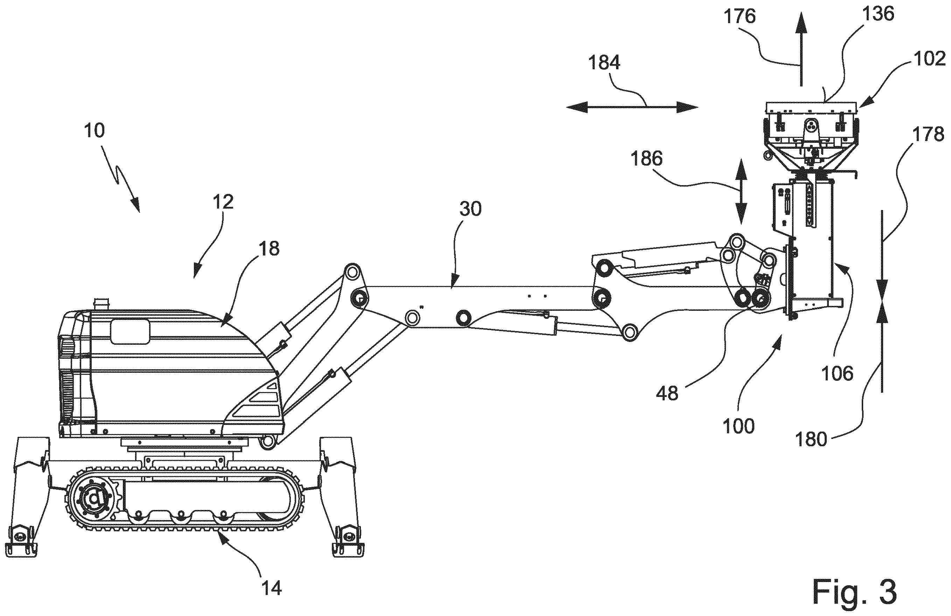

Mit Bezugnahme auf Fig. 2 sowie mit ergänzender Bezugnahme auf Fig. 3 wird ein mit 100 bezeichnetes Anbaugerät für die Handhabungsvorrichtung 10 veranschaulicht und näher erläutert.

Das Anbaugerät 100 ist als Gerät zur abtragenden oder glättenden Bearbeitung von Wänden oder Decken ausgebildet. Die Bearbeitung kann ein Schleifen, Fräsen, Polieren, Stocken und/oder Glätten umfassen. Wie vorstehend bereits ausgeführt kann der Begriff Wand sowohl Seitenwände mit im Wesentlichen vertikaler Erstreckung als auch Deckenwände mit im Wesentlichen horizontaler Erstreckung umfassen.

Das Anbaugerät 100 umfasst einen Bearbeitungskopf 102, der auch als Arbeitskopf bezeichnet werden kann. Der Bearbeitungskopf 102 ist an einem distalen Ende des Anbaugerätes 100 ausgebildet. An einem hiervon abgewandten, proximalen Ende des Anbaugerätes 100 ist eine Montageeinheit 104 vorgesehen. Die Montageeinheit 104 ist zur Aufnahme des Anbaugerätes an der Anbauschnittstelle 38 der Handhabungsvorrichtung 10 ausgebildet, vergleiche hierzu Fig. 1 sowie Fig. 3.

Zwischen der Montageeinheit 104 und dem Bearbeitungskopf 102 ist eine Kompensationsanordnung 106 angeordnet. Jedenfalls gemäß dem in Fig. 2 gezeigten Ausführungsbeispiel ist der Bearbeitungskopf 102 über eine Gelenkanordnung 108 mit der Kompensationsanordnung 106 verbunden. Die Gelenkanordnung 108 kann auch als kardanische Aufhängung bezeichnet werden. Ferner ist eine mit 110 bezeichnete Steuereinheit vorgesehen, die als Bestandteil des Anbaugerätes 100 gestaltet ist.

Wie vorstehend bereits ausgeführt, wird in zumindest einigen beispielhaften Ausführungsformen darauf abgestellt, möglichst wenige oder gar keine Schnittstellen zum Austausch von Informationen und/oder Steuerbefehlen zwischen der Handhabungsvorrichtung 10 und dem Anbaugerät 100 vorzusehen. Dies erhöht die Flexibilität, das Anbaugerät 100 ist mit verschiedenen Handhabungsvorrichtung 10 verwendbar, ohne dass es aufwendiger Umrüstungen und dergleichen bedarf.

Mit Bezugnahme auf Fig. 2 sowie mit ergänzendem Bezug auf die Figuren 3-8 werden Komponenten und Funktionen des Anbaugerätes 100 näher erläutert.

Die Montageeinheit 104 umfasst eine Aufnahme 116, die an die Anbauschnittstelle 38 der Handhabungsvorrichtung 10 angepasst ist. Die Aufnahme 116 erlaubt ein Einhängen des Anbaugerätes 100 an der Anbauschnittstelle 38. Ferner umfasst die Montageeinheit 104 ein Drehlager 118, welches ein Drehzentrum für eine Scheibe 120 bildet, die die Aufnahme bzw. die Aufnahmen 116 trägt.

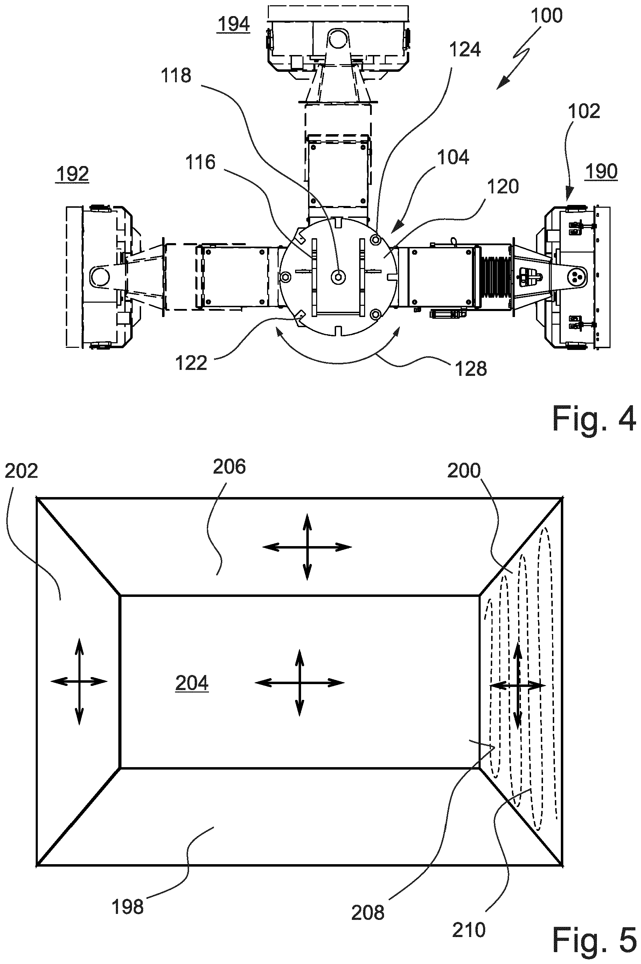

Die Scheibe 120 weist umfänglich verteilte Rastausnehmungen 122 auf, die eine Teilung der Scheibe 120 definieren. Ferner sind bei dem Anbaugerät 100 Halteelemente 124 vorgesehen, die in die Rastausnehmungen 122 eingreifen, um eine aktuelle Drehlage der Scheibe 120 relativ zum Anbaugerät 100 zu definieren. Das Drehlager 118 stellt eine Schwenkachse 126 für die Aufnahme 116 mitsamt der Scheibe 120 bereit. In diesem Zusammenhang veranschaulicht beispielsweise Fig. 4 durch einen gekrümmten Doppelpfeil 128 Schwenkbewegungen zwischen der Scheibe 120 mit der Aufnahme 116 sowie dem Anbaugerät 100.

Der Bearbeitungskopf 102 weist zumindest eine Werkzeugaufnahme 130 auf, die mit einem Werkzeug bestückt werden kann. Im Ausführungsbeispiel gemäß Fig. 2 sind drei tellerförmige Werkzeugaufnahmen 130 vorgesehen, die innerhalb eines Ringes angeordnet sind. Es versteht sich, dass anderweitig gestaltete Bearbeitungsköpfe lediglich eine einzige Werkzeugaufnahme 130 oder mehrere Werkzeugaufnahmen 130 aufweisen können. Zum Antrieb der Werkzeuge, die an der zumindest einen Werkzeugaufnahme 130 aufgenommen sind, ist ein Antrieb 132 vorgesehen, der als hydraulischer Antrieb oder als elektromotorischer Antrieb gestaltet ist. Ferner ist beispielhaft eine Staubabsaugung 134 vorgesehen, um die Staubentwicklung bei der Bearbeitung einzudämmen.

Je nach Anwendungsfall kann die Bearbeitung mit dem Anbaugerät 100 trocken oder nass unter Hinzugabe einer Flüssigkeit zur Staubbindung erfolgen. Demgemäß kann zusätzlich oder alternativ zur Staubabsaugung 134 eine Fluidversorgung vorgesehen sein, die beispielsweise Wasser der Bearbeitungsstelle zuführt.

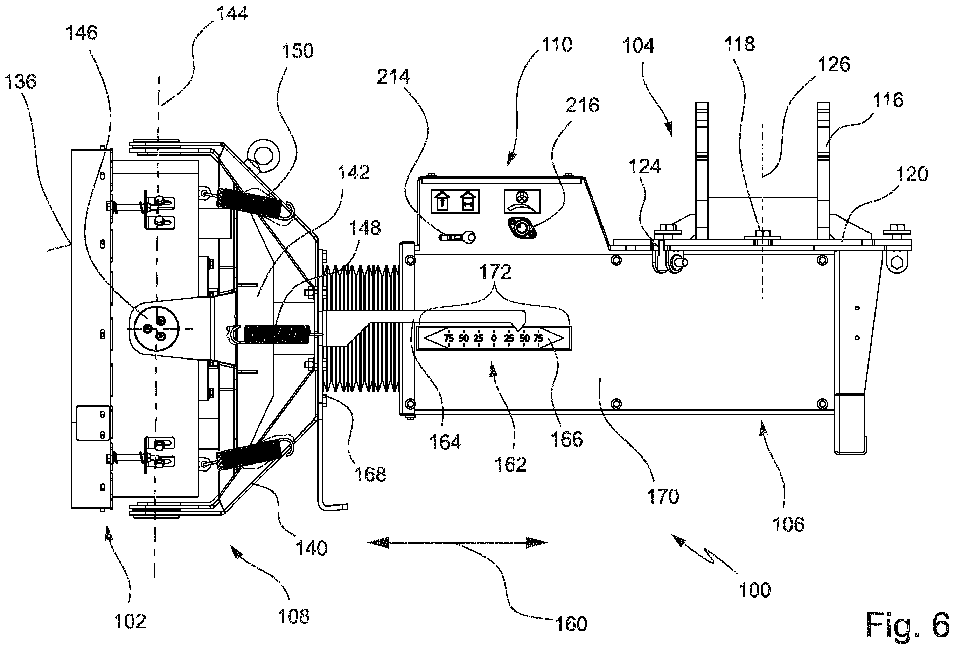

In Fig. 3 sowie in Fig. 6 ist mit 136 eine Bearbeitungsebene angedeutet. Während der Verwendung des Anbaugerätes 100 zur Bearbeitung von Flächen ist die Bearbeitungsebene 136 möglichst parallel zur entsprechenden Bearbeitungsfläche ausgerichtet.

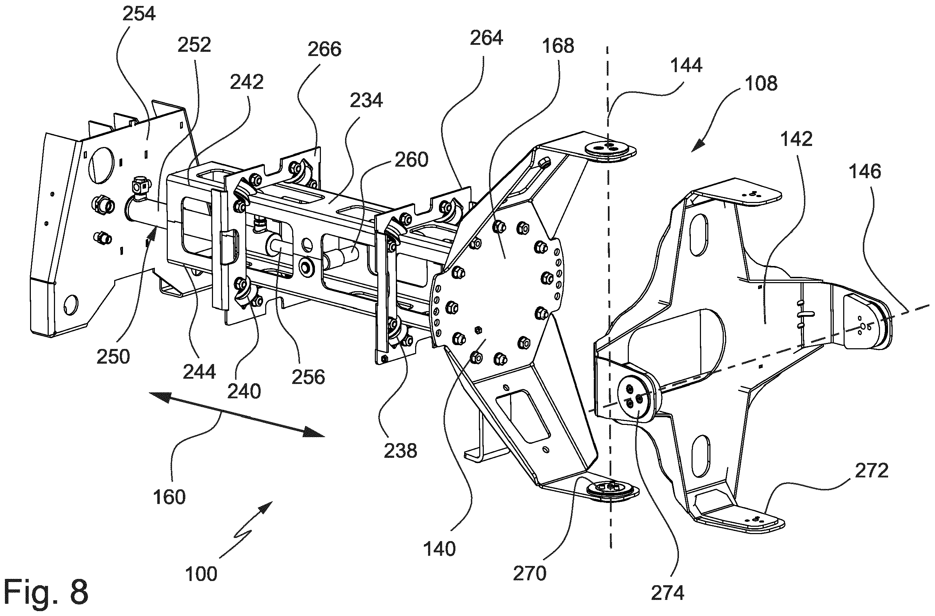

Die Gestaltung der Gelenkanordnung 108 wird mit Bezug auf die Figuren 2, 6, 7 und 8 näher erläutert. Die Gelenkanordnung 108 weist eine erste Aufnahmegabel 140 sowie eine zweite Aufnahmegabel 142 auf. Die erste Aufnahmegabel 140 stellt eine Schwenkachse 144 für die zweite Aufnahmegabel 142 bereit, vergleiche Fig. 6 und Fig. 8. Die zweite Aufnahmegabel 142 ist schwenkbar an der ersten Aufnahmegabel 140 aufgenommen. Die zweite Aufnahmegabel 142 stellt eine Schwenkachse 146 für den Bearbeitungskopf 102 bereit. Der Bearbeitungskopf 102 ist schwenkbar an der zweiten Aufnahmegabel 142 aufgenommen.

Die Schwenkachsen 144, 146 der Aufnahmegabeln 140, 142 stehen senkrecht aufeinander. Im Ausführungsbeispiel gemäß Fig. 6 schneiden sich die beiden Schwenkachsen. Die Aufnahmegabeln 140,142 erlauben eine kardanische Aufhängung des Bearbeitungskopfes 102. Dies ermöglicht Ausgleichsbewegungen, so dass die Bearbeitungsebene 136 bei gegebenem Anpressdruck hochgenau parallel zur Bearbeitungsfläche ausgerichtet werden kann.

In Fig. 6 sind Vorspannelemente 148, 150 in Form von Federn angedeutet. Die Vorspannelemente 148,150 drängen den Bearbeitungskopf 102 in der Gelenkanordnung 108 in eine Soll-Lage. Zumindest ein entsprechendes Vorspannelement 148 ist zwischen der Aufnahmegabel 140 und der Aufnahmegabel 142 angeordnet. Zumindest ein weiteres Vorspannelement 150 ist zwischen der Aufnahmegabel 142 und dem Bearbeitungskopf 102 angeordnet. Es bietet sich eine paarweise, gegenüberliegende Anordnung der jeweiligen Vorspannelemente 148,150 an. Das zumindest eine Vorspannelement 148 drängt die Aufnahmegabel 142 in eine Soll-Lage in Bezug auf die Aufnahmegabel 140. Das zumindest eine Vorspannelement 150 drängt dem Bearbeitungskopf 102 in eine Soll-Lage in Bezug auf die Aufnahmegabel 142.

In Fig. 2 ist durch einen mit 160 bezeichneten Doppelpfeil eine Längsrichtung des Anbaugerätes 100 bzw. der Kompensationsanordnung 106 angedeutet. Die Kompensationsanordnung 106 definiert eine Längsachse für eine entsprechende Bewegung zwischen dem Bearbeitungskopf 102 und der Montageeinheit 104. Diese Bewegung (Ausgleichsbewegungen) erfolgt entlang der Längsachse in der Längsrichtung 160.

Eine aktuelle Position des Bearbeitungskopfes 102 wird durch einen Indikator 162 angezeigt. Der Indikator 162 umfasst einen Zeiger 164 sowie eine Skala 166. Im Ausführungsbeispiel gemäß Fig. 2 ist der Zeiger 164 an einer Grundplatte 168 der Gelenkanordnung 108 angeordnet. Die Grundplatte 168 ist ein Bestandteil der Aufnahmegabel 140 oder fest mit dieser verbunden. Wenn also der Bearbeitungskopf 102 in der Längsrichtung 160 ausgefahren oder eingefahren wird, vollzieht der Zeiger 164 die gleiche Bewegung. Die Skala 166 ist beispielhaft an einem Gehäuse 170 der Kompensationsanordnung 106 angebracht. Die Skala 166 kann quantitative Informationen und qualitative Informationen enthalten. Qualitative Informationen können etwa Farbfelder und dergleichen umfassen.

Die Skala 166 veranschaulicht einen Arbeitsbereich 172 (Fig. 6), in dem die Funktionsfähigkeit des Anbaugerätes 100 gewährleistet ist. Im Arbeitsbereich 172 wird sichergestellt, dass die Anpresskraft des Bearbeitungskopfes 102 im gewünschten Zielbereich liegt. Am Indikator 162 kann der Bediener auch aus einer gewissen Entfernung ablesen, ob sich der Bearbeitungskopf 102 in einer günstigen Betriebsposition in Bezug auf die Montageeinheit 104 und somit auf die Handhabungsvorrichtung 10 befindet. Insbesondere dann, wenn das Anbaugerät 100 in verschiedenen Orientierungen betreibbar ist, kann eine Mehrzahl von Indikatoren 162 vorgesehen sein, um die Erfassung der Lageinformation zu erleichtern.

Fig. 3 veranschaulicht einen montierten Zustand des Anbaugerätes 100 an der Anbauschnittstelle 38 der Handhabungsvorrichtung 10. Die Handhabungsvorrichtung 10 ist in Fig. 3 für eine Deckenbearbeitung eingerichtet. Das Anbaugerät 100 ist in einer vertikalen Orientierung am Ausleger 30 aufgenommen, wobei die Arbeitsebene 136 des Bearbeitungskopfes 102 parallel zur flächigen Erstreckung der Decke angeordnet ist. Im Zustand gemäß Fig. 3 muss die Handhabungsvorrichtung 10 das Anbaugerät 10 nicht nur halten, sondern zusätzlich auch für eine Abstützung sorgen, damit eine Anpresskraft 176 aufgebracht werden kann.

Im Betrieb des Anbaugerätes 100 ist eine beträchtliche Anpresskraft gefordert, die möglichst konstant aufgebracht werden soll. In Fig. 3 veranschaulicht ein mit 176 bezeichneter Pfeil die entsprechende Anpresskraft. Die Anpresskraft 176 wird durch die Kompensationsanordnung 106 aufgebracht. Die Kompensationsanordnung 106 überträgt ferner eine Gegenkraft 178, die vom Ausleger 30 der Handhabungsvorrichtung 10 abgestützt oder aufgefangen werden muss. Die hierfür erforderliche Haltekraft ist in Fig. 3 mit 180 bezeichnet.

In Fig. 3 ist ein Bearbeitungspfad 184 angedeutet, der eine horizontale Bewegung des Bearbeitungskopfes 102 entlang der zu bearbeitenden Fläche veranschaulicht. Während der Bearbeitung treten naturgemäß Positionsschwankungen und sonstige Störgrößen auf, die zu Abweichungen bei der resultierenden Anpresskraft 176 führen können. Die Kompensationsanordnung 106 ist dazu ausgestaltet, für eine möglichst konstante Anpresskraft 176 zu sorgen, und zwar auch dann, wenn Ausgleichsbewegungen erforderlich sind, vergleiche den Doppelpfeil 186 in Fig. 3. Mit solchen Ausgleichsbewegungen kann etwa auf Positionsschwankungen oder eine gewisse Nachgiebigkeit des Auslegers 30 der Handhabungsvorrichtung 10 reagiert werden. Der Umfang der Ausgleichsbewegung 186 kann über den Indikator 162 einfach abgelesen werden.

Die Verschwenkbarkeit der Anbauschnittstelle 38 um die Schwenkachse 48 ermöglicht die Herbeiführung und Wahrung der gewünschten Orientierung des Anbaugerätes 100 in Bezug auf die zu bearbeitende Fläche (z.B. Wand oder Decke). Dies kann unabhängig von der aktuellen Orientierung des Armabschnitts 36 (Fig. 1) in Bezug auf diese Fläche erfolgen. Auf diese Weise kann sichergestellt werden, dass der Bearbeitungskopf 102 möglichst parallel zur jeweiligen Fläche ausgerichtet ist. Dies gilt auch dann, wann das Anbaugerät 100 über den Ausleger 30 der Handhabungsvorrichtung 10 entlang der zu bearbeitenden Fläche verfahren wird.

Fig. 4 veranschaulicht verschiedene denkbare Orientierungen für das Anbaugerät 100 aus Sicht der Anbauschnittstelle 38 der Handhabungsvorrichtung 10. In Fig. 4 ist mit 190 eine Orientierung zur Bearbeitung einer rechtsseitigen Wand bezeichnet. Mit 192 ist anhand einer gestrichelten Darstellung eine Orientierung zur Bearbeitung einer linksseitigen Wand bezeichnet. Mit 194 ist eine Orientierung zur Bearbeitung einer deckenseitigen Wand bezeichnet. Der gekrümmte Doppelpfeil 128 in Fig. 4 zeigt, dass die Scheibe 120 mit der Aufnahme 116 um das Drehlager 118 der Montageeinheit 104 verdreht werden kann, wobei die Rastausnehmungen 122 verschiedene Rastpositionen für die Halteelemente 124 definieren. Eine Teilung kann etwa 90° (Grad) umfassen. Es versteht sich, dass auch Zwischenschritte wie etwa 45°-Schritte vorstellbar sind. Eine solche Orientierung ist grundsätzlich in Zusammenhang mit der Bearbeitung geneigter Wände vorstellbar.

Mit Bezugnahme auf Fig. 5 sowie mit ergänzender Bezugnahme auf Fig. 3 und Fig. 4 werden verschiedene Anwendungen für das Anbaugerät 100 zur Flächenbearbeitung veranschaulicht. Fig. 5 zeigt eine perspektivische Ansicht eines Raumes, der einen Boden 198, eine rechte Wand 200, eine linke Wand 202, eine hintere Wand 204, sowie eine Deckenwand oder obere Wand 206 aufweist. Das Anbaugerät 100 ist zur Bearbeitung der seitlichen Wände 200, 202, 204 ausgebildet. Dies erfordert gegebenenfalls ein Umsetzen der Handhabungsvorrichtung 10 zur Grobausrichtung. Ferner ist mit dem Anbaugerät 100 eine Bearbeitung der oberen Wand 206 möglich. Grundsätzlich ist auch eine Bearbeitung des Bodens 198 vorstellbar, dies ist jedoch nicht die Hauptanwendung.

Beispielsweise bildet die rechte Wand 200 eine ebene Fläche 208, welche möglichst vollständig und gleichmäßig zu bearbeiten ist. Eine mit 210 bezeichnete gestrichelte Kurve veranschaulicht in stark vereinfachter Form einen möglichen Bearbeitungspfad bzw. eine entsprechende Bewegungsbahn des Anbaugerätes 100.

Aus Sicht des Bedieners der Handhabungsvorrichtung 10, der das Anbaugerät 100 aufgenommen ist, erfolgt die eigentliche Bearbeitung jeweils in einer Ebene, so dass nicht unbedingt sämtliche verfügbaren Freiheitsgrade der Handhabungsvorrichtung 10 genutzt werden müssen. Ferner soll das Anbaugerät 100 von der Handhabungsvorrichtung 10 möglichst parallel zur jeweiligen Wand 200, 202, 204, 206 geführt werden. Die Handhabungsvorrichtung 10 weist jedoch zumindest in der Gestaltung gemäß den Figuren 1 und 3 eine Kinematik auf, die strukturell nicht ideal für solche Bewegungen in einer Ebene ausgebildet ist. Müsste der Bediener selbst für eine entsprechende Approximation der Bewegung sorgen, würde dies zu einem deutlich höheren Bedieneraufwand und schlussendlich zu wesentlich größeren Abweichungen und Schwankungen der Anpresskraft sorgen.

Aus diesem Grund ist die Steuereinrichtung 60 der Handhabungsvorrichtung 10 zumindest gemäß beispielhaften Ausführungsformen dazu ausgestaltet, in einem Vertikalmodus und oder einem Horizontalmodus betrieben zu werden. Im jeweiligen Modus sorgt die Steuereinrichtung 60 dafür, dass die gewünschte Ebene parallel zur zu bearbeitenden Wand möglichst nicht verlassen wird, so dass sich der Bedienaufwand für den Bediener deutlich reduziert. Idealerweise muss der Bediener sodann nur noch eine einfache Bewegung in einem zweidimensionalen Raum steuern, vergleiche den Bearbeitungspfad 210 in Fig. 5. Dies verringert auftretende Druckschwankungen beim Anpressdruck deutlich. Die Bearbeitung kann mit hoher Gleichmäßigkeit und entsprechend gutem Ergebnis durchgeführt werden.

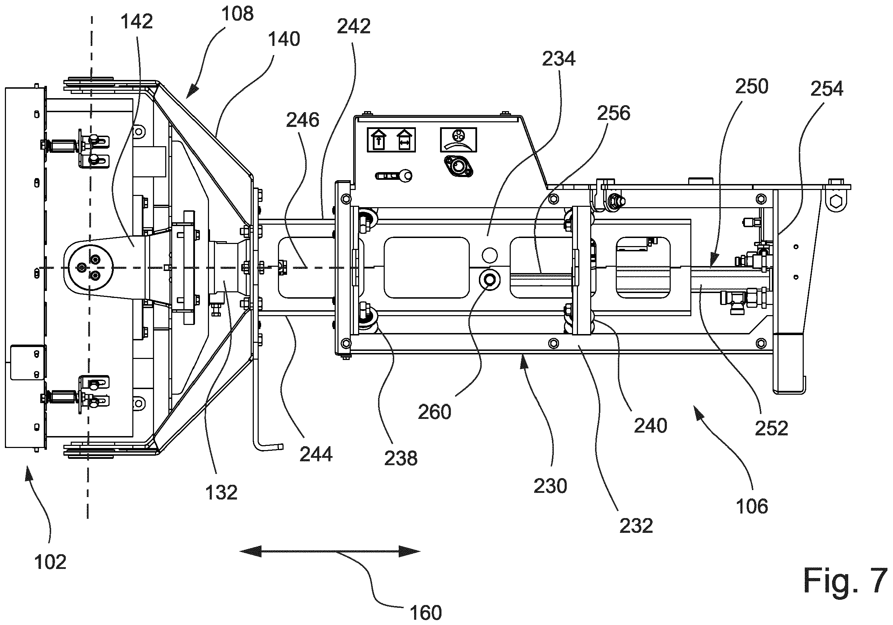

Fig. 6 sowie Fig. 7 veranschaulichen Seitenansichten des Anbaugerätes 100. Fig. 8 veranschaulicht in Ergänzung eine perspektivische, teilweise explodierte Darstellung.

Fig. 6 zeigt, dass die Steuereinheit 110 des Anbaugerätes 100 verschiedene einfache Bedienelemente aufweisen kann. Hierbei handelt es sich beispielsweise um einen Betriebsarten-Wahlschalter 214. Mit dem Wahlschalter 214 kann beispielsweise zwischen einer Bearbeitung seitlicher Wände sowie einer Deckenbearbeitung umgeschaltet werden. Bei der Deckenbearbeitung muss die Kompensationsanordnung 106 das Eigengewicht des Anbaugerätes 100 in anderer Weise als bei der Bearbeitung von Seitenwänden berücksichtigen.

Ferner ist mit 216 ein Geschwindigkeitsregler angedeutet, der eine Bearbeitungsgeschwindigkeit, etwa eine Drehgeschwindigkeit und/oder Umlaufgeschwindigkeit der zumindest einen Werkzeugaufnahme 130 regelt. Die Relativgeschwindigkeit zwischen dem Werkzeug und der zu bearbeitenden Fläche ist von der Art der Bearbeitung sowie vom Material der Wand abhängig. Vorzugsweise weist die Steuereinheit 110 zumindest in beispielhaften Ausführungsformen keine weiteren Bedienelemente auf. Dies vereinfacht die Bedienung weiter. Während des Betriebs des Anbaugerätes 100 muss der Bediener die Bedienelemente der Steuereinheit 110 nicht betätigen.

Der Indikator 162 gibt während des Betriebs eine Rückmeldung über die aktuelle Kompensationsbewegung der Kompensationseinheit 106. Idealerweise ist der Zeiger 164 in einer Null-Lage oder Neutrallage der Skala 166 angeordnet. Dies würde bedeuten, dass die gewünschte Anpresskraft aufgebracht wird, und dass keine Kompensationsbewegung erforderlich ist. Ausgehend von dieser Null-Lage können Kompensationsbewegungen in der Längsrichtung 160 erfolgen, um etwa auf Abstandsschwankungen zwischen der Anbauschnittstelle 38 des Auslegers 30 der Handhabungsvorrichtung 10 und der zu bearbeitenden Fläche zu reagieren. Sofern lediglich moderate Kompensationsbewegungen gegeben sind, kann die Kompensationsanordnung die Anpresskraft im Zielbereich halten. Die Bearbeitung muss nicht unterbrochen werden und die Gleichmä-βigkeit der Bearbeitung wird beibehalten. Allenfalls dann, wenn übermäßig große Kompensationsbewegungen auftreten, muss der Bediener die Bearbeitung unterbrechen, etwa um die Handhabungsvorrichtung 10 erneut grob auszurichten.

Die Ausgleichsbewegung wird durch die Kompensationsanordnung 106 ermöglicht. Fig. 7 zeigt die Kompensationsanordnung 106 in einem Zustand, in dem das Gehäuse 170 aus Veranschaulichungsgründen nicht dargestellt ist. Die Kompensationsanordnung 106 umfasst eine Führung 230. Die Führung 230 umfasst einen Führungsrahmen 232 sowie einen darin verfahrbar gelagerten Profilschlitten 234. Zwischen den Führungsrahmen 232 und dem Profilschlitten 234 sind Rollen 238, 240 angeordnet, vgl. Fig. 8. Die Rollen 238, 240 sind beispielhaft als Profil-Rollen gestaltet und an Laufbahnen 242, 244 an Längskanten des Profilschlittens 234 angepasst.

Die Ein- und Ausfahrbewegung des Profilschlittens 234 erfolgt entlang einer Längsachse 246, die auch die Längsrichtung 160 bestimmt. Entlang der Längsachse 246 sind Ausgleichsbewegungen möglich, um den Anpressdruck bzw. die Anpresskraft möglichst konstant zu halten. Die Kompensationsbewegung bzw. die Kompensation der Anpresskraft erfolgt durch einen Arbeitszylinder 250, der ebenso der Kompensationsanordnung 106 zugeordnet ist. Der Arbeitszylinder 250 ist innerhalb der Führung 230 und parallel zur Längsachse 246 angeordnet. Der Arbeitszylinder 250 umfasst ein Zylindergehäuse 252, das sich an einer Grundplatte 254 am proximalen Ende der Kompensationsanordnung 106 abstützt. Ferner umfasst der Arbeitszylinder 250 eine Kolbenstange 256, die an ein Querstück 260 und somit am Profilschlitten 234 angreift. Das Zylindergehäuse 252 ist mit dem Führungsrahmen 232 verbunden. Die Kolbenstange 256 ist mit dem Profilschlitten 234 verbunden. Demgemäß bewirkt die Bewegung der Kolbenstange 256 gegenüber dem Zylindergehäuse 252 eine Längsbewegung zwischen dem Profilschlitten 234 sowie dem Führungsrahmen 232.

Für den Arbeitszylinder 250 ist eine Druckregelung vorgesehen, die beispielsweise durch die Steuereinheit 110 bewerkstelligt wird. Die Druckregelung ist in das Anbaugerät integriert und vorzugsweise unabhängig von der Handhabungsvorrichtung 10. Die Handhabungsvorrichtung 10 stellt jedoch eine Druckmittelversorgung bereit.

Die perspektivische Darstellung gemäß Fig. 8 zeigt anschaulich, dass die Führungsrollen 238, 240 an voneinander versetzten Führungswänden 264, 266 aufgenommen sind. Die Führungswände 264, 266 sind mit dem Führungsrahmen 232 verbunden.

Am distalen Ende des Profilschlittens 234 ist dieser mit der Grundplatte 168 verbunden. Demgemäß ist die erste Aufnahmegabel 140 fest am Profilschlitten 234 aufgenommen. Fig. 8 zeigt ferner die zweite Aufnahmegabel 142 in einem explodierten, gelösten Zustand. Zwischen der ersten Aufnahmegabel 140 und der zweiten Aufnahmegabel 142 ist die Schwenkachse 144 vorgesehen. Die zweite Aufnahmegabel 142 stellt ferner die Schwenkachse 146 für den Bearbeitungskopf 102 bereit (in Fig. 8 nicht dargestellt).

Die Aufnahmegabel 140 weist seitliche Halterarme 270 auf. Die Aufnahmegabel 142 weist erste Haltearme 272 sowie zweite Haltearme 274 auf. Die Haltearme 272 sind den Haltearmen 270 der Aufnahmegabel 140 zugeordnet. Die Haltearme 274 dienen der Aufnahme des Bearbeitungskopfes 102. Gemeinsam bilden die Haltearme 270, 272 die Schwenkachse 144. Die Haltearme 274 bilden die Schwenkachse 146. Insgesamt erlaubt die gezeigte Gestaltung der Gelenkanordnung 108 in einfacher Weise eine Ausrichtung und Anpassung des Bearbeitungskopfes 102 in Bezug auf die zu bearbeitende Fläche. Somit wird die gewünschte Parallelausrichtung unterstützt. 252 ist mit dem Führungsrahmen 232 verbunden. Die Kolbenstange 256 ist mit dem Profilschlitten 234 verbunden. Demgemäß bewirkt die Bewegung der Kolbenstange 256 gegenüber dem Zylindergehäuse 252 eine Längsbewegung zwischen dem Profilschlitten 234 sowie dem Führungsrahmen 232.

Für den Arbeitszylinder 250 ist eine Druckregelung vorgesehen, die beispielsweise durch die Steuereinheit 110 bewerkstelligt wird. Die Druckregelung ist in das Anbaugerät integriert und vorzugsweise unabhängig von der Handhabungsvorrichtung 10. Die Handhabungsvorrichtung 10 stellt jedoch eine Druckmittelversorgung bereit.

Die perspektivische Darstellung gemäß Fig. 8 zeigt anschaulich, dass die Führungsrollen 238, 240 an voneinander versetzten Führungswänden 264, 266 aufgenommen sind. Die Führungswände 264, 266 sind mit dem Führungsrahmen 232 verbunden.

Am distalen Ende des Profilschlittens 234 ist dieser mit der Grundplatte 168 verbunden. Demgemäß ist die erste Aufnahmegabel 140 fest am Profilschlitten 234 aufgenommen. Fig. 8 zeigt ferner die zweite Aufnahmegabel 142 in einem explodierten, gelösten Zustand. Zwischen der ersten Aufnahmegabel 140 und der zweiten Aufnahmegabel 142 ist die Schwenkachse 144 vorgesehen. Die zweite Aufnahmegabel 142 stellt ferner die Schwenkachse 146 für den Bearbeitungskopf 102 bereit (in Fig. 8 nicht dargestellt).

Die Aufnahmegabel 140 weist seitliche Halterarme 270 auf. Die Aufnahmegabel 142 weist erste Haltearme 272 sowie zweite Haltearme 274 auf. Die Haltearme 272 sind den Haltearmen 270 der Aufnahmegabel 140 zugeordnet. Die Haltearme 274 dienen der Aufnahme des Bearbeitungskopfes 102. Gemeinsam bilden die Haltearme 270, 272 die Schwenkachse 144. Die Haltearme 274 bilden die Schwenkachse 146. Insgesamt erlaubt die gezeigte Gestaltung der Gelenkanordnung 108 in einfacher Weise eine Ausrichtung und Anpassung des Bearbeitungskopfes 102 in Bezug auf die zu bearbeitende Fläche. Somit wird die gewünschte Parallelausrichtung unterstützt.

## Patentansprüche

1. Als mobile Arbeitsmaschine (12) gestaltete mobile Handhabungsvorrichtung (10), die Folgendes aufweist:
- ein Fahrwerk (14) mit einem Fahrantrieb (62),
- einen Aufbau (18), der einen steuerbaren Ausleger (30) trägt, und
- ein Anbaugerät (100) zur abtragenden oder glättenden Bearbeitung von Wänden oder Decken,
wobei das Anbaugerät (100) an einer Anbauschnittstelle (38) am Ausleger (30) aufgenommen ist und Folgendes aufweist:
- eine Montageeinheit (104) zur Aufnahme an der Anbauschnittstelle (38) der Handhabungsvorrichtung (10),
wobei die Montageeinheit (104) zumindest zwei zueinander versetzte Schwenkpositionen (190, 192, 194) für das Anbaugerät (100) bereitstellt, und
- einen Bearbeitungskopf (102), der mit zumindest einem Werkzeug zur abtragenden oder glättenden Bearbeitung bestückbar ist,
**gekennzeichnet durch**
- eine Kompensationsanordnung (106) zwischen der Montageeinheit (104) und dem Bearbeitungskopf (102), die eine Längsachse (246) definiert,
wobei der Bearbeitungskopf (102) relativ zur Montageeinheit (104) in einer Längsrichtung (160) entlang der Längsachse (246) verfahrbar ist,
wobei die Kompensationsanordnung (106) dazu ausgestaltet ist, in einem definierten Arbeitsbereich (172) entlang der Längsachse (246) eine definierte Anpresskraft für den Bearbeitungskopf (102) in Richtung auf die zu bearbeitende Oberfläche bereitzustellen,
wobei im Arbeitsbereich (172) der Kompensationsanordnung (106) Ausgleichsbewegungen entlang der Längsachse (246) von betragsmäßig mindestens 200 mm ermöglicht sind, und
wobei das Anbaugerät (100) unabhängig von Steuerbefehlen durch die Handhabungsvorrichtung (10) betreibbar und entlang der zu bearbeitenden Oberfläche verfahrbar ist.

2. Handhabungsvorrichtung nach Anspruch 1, wobei die Kompensationsanordnung (106) im Arbeitsbereich (172) Positionsveränderungen der Anbauschnittstelle (38) der Handhabungsvorrichtung (10) entlang der Längsachse (246) kompensiert.

3. Handhabungsvorrichtung nach Anspruch 1 oder 2, wobei im Arbeitsbereich (172) der Kompensationsanordnung (106) Ausgleichsbewegungen entlang der Längsachse (246) von betragsmäßig mindestens 300 mm, vorzugsweise von mindestens 400 mm, ermöglicht sind.

4. Handhabungsvorrichtung nach einem der Ansprüche 1 bis 3, wobei die Kompensationsanordnung (106) in einem ersten Betriebsmodus und zumindest einem zweiten Betriebsmodus betreibbar ist, wobei der erste Betriebsmodus eine vertikale Orientierung der Längsachse (246) und der zumindest eine zweite Betriebsmodus eine horizontale Orientierung der Längsachse (246) berücksichtigt.

5. Handhabungsvorrichtung nach einem der Ansprüche 1 bis 4, wobei die Kompensationsanordnung (106) derart geregelt wird, dass im Arbeitsbereich (172) eine im Wesentlichen konstante Anpresskraft bereitsteht, wobei eine resultierende Anpresskraft im Arbeitsbereich (172) um maximal 15 %, vorzugsweise um maximal 10 %, weiter bevorzugt um maximal 5 % schwankt.

6. Handhabungsvorrichtung nach einem der Ansprüche 1 bis 5, wobei die Kompensationsanordnung (106) zumindest einen Arbeitszylinder (250) umfasst, der sich in der Längsrichtung (160) erstreckt, wobei der Arbeitszylinder (250) an eine Druckmittelversorgung (64) der Handhabungsvorrichtung (10) anschließbar ist, wobei die Regelung eines Ist-Drucks im Arbeitszylinder (250) bei gegebenem Versorgungsdruck durch eine Druckregelung erfolgt, die beim Anbaugerät (100) selbst vorgesehen ist.

7. Handhabungsvorrichtung nach einem der Ansprüche 1 bis 6, wobei die Kompensationsanordnung (106) ferner eine Längsführung (230) für den Bearbeitungskopf (102) umfasst, die unabhängig von einer aktuellen Orientierung des Anbaugerätes (100) eine Bewegung des Bearbeitungskopfes (102) in der Längsrichtung (160) führt, und wobei die Längsführung (230) vorzugsweise als Rollenführung gestaltet ist.

8. Handhabungsvorrichtung nach Anspruch 7, wobei die Längsführung (230) einen Führungsrahmen (232) umfasst, in dem ein relativ zum Führungsrahmen (232) verfahrbarer Profilschlitten (234) aufgenommen ist, der sich am Führungsrahmen (232) abstützt, und wobei der Bearbeitungskopf (102) an einem Ende des Profilschlittens (234) aufgenommen ist.

9. Handhabungsvorrichtung nach einem der Ansprüche 1 bis 8, wobei die Kompensationsanordnung (106) ferner einen visuellen Indikator (162) zur Veranschaulichung einer aktuellen Arbeitsposition des Bearbeitungskopfes (102) im Arbeitsbereich (172) aufweist.

10. Handhabungsvorrichtung nach einem der Ansprüche 1 bis 9, wobei der Bearbeitungskopf (102) über eine Gelenkanordnung (108) mit einem Ende der Kompensationsanordnung (106) verbunden ist, wobei zumindest ein Vorspannelement (148, 150) vorgesehen ist, das den Bearbeitungskopf (102) in Richtung auf eine Soll-Orientierung drängt, und wobei die Gelenkanordnung (108) vorzugsweise als kardanische Gelenkanordnung gestaltet ist und zwei Schwenkachsen (144, 146) bereitstellt, die senkrecht zueinander und senkrecht zur Längsachse (246) orientiert sind.

11. Handhabungsvorrichtung nach einem der Ansprüche 1-10, die Folgendes aufweist:
- eine Druckmittelversorgungseinheit (64), und
- eine Steuereinrichtung (60),
wobei die Kompensationsanordnung (106) über die Druckmittelversorgungseinheit (64) mit einem Druckmittel versorgt wird,
wobei die Steuereinrichtung (60) dazu ausgebildet ist, das Anbaugerät (100) in einer definierten Orientierung relativ zu einer Wand (200, 202, 204) oder Decke (206) zu führen und während einer Vorschubbewegung des Anbaugerätes (100) entlang der Wand (200, 202, 204) oder Decke (206), die durch Bedienerbefehle gesteuert wird, die Anbauschnittstelle (38) in einem definierten Abstandbereich von der Wand (200, 202, 204) oder Decke (206) zu positionieren, und
wobei die Kompensationsanordnung (106) die Anpresskraft für den Bearbeitungskopf (102) in Richtung auf die zu bearbeitende Oberfläche bereitstellt und sich das Anbaugerät (100) dabei an der Handhabungsvorrichtung (10) abstützt.

12. Handhabungsvorrichtung (10) nach Anspruch 11, wobei der Aufbau (18) gegenüber dem Fahrwerk (14) verdrehbar ist, wobei der Ausleger (30) einen ersten Armabschnitt (32), einen zweiten Armabschnitt (34) und einen dritten Armabschnitt (36) aufweist, die eine offene Kette bilden und relativ zueinander verschwenkbar sind, wobei der erste Armabschnitt (32) verschwenkbar am Aufbau (18) aufgenommen ist, wobei der dritte Armabschnitt (36) die Anbauschnittstelle (38) trägt, die verschwenkbar am dritten Armabschnitt (36) aufgenommen ist, wobei Schwenkachsen (42, 44, 46, 48) der Armabschnitte (32, 34, 36) des Auslegers (30) jeweils parallel zueinander und senkrecht zu einer Drehachse (22) des Aufbaus (18) gegenüber dem Fahrwerk (14) orientiert sind, und wobei den Schwenkachsen (42, 44, 46, 48) und der Drehachse (22) Antriebe (20, 50, 52, 54, 56) zugeordnet sind, die über die Steuereinrichtung (60) steuerbar sind.

13. Handhabungsvorrichtung (10) nach Anspruch 11 oder 12, wobei die Anbauschnittstelle (38) um eine Schwenkachse (48) verschwenkbar ist, um eine parallele Orientierung des Bearbeitungskopfes (102) relativ zur Wand (200, 202, 204) oder Decke (206) zu gewährleisten.

14. Handhabungsvorrichtung (10) nach Anspruch 12 oder 13, wobei die Steuereinrichtung (60) zumindest in einem Horizontalmodus oder einen Vertikalmodus betreibbar ist, wobei die Steuereinrichtung (60) im Horizontalmodus die Antriebe der Handhabungsvorrichtung (10) derart ansteuert, dass das Anbaugerät (100) entlang eines horizontalen Pfades verfahren wird, wobei die Steuereinrichtung (60) im Vertikalmodus die Antriebe der Handhabungsvorrichtung (10) derart ansteuert, dass das Anbaugerät (100) entlang eines vertikalen Pfades verfahren wird, und wobei die Steuereinrichtung (60) im Horizontalmodus Bewegungen des Anbaugerätes (100) in einer Horizontalebene ermöglicht und im Vertikalmodus Bewegungen des Anbaugerätes (100) in einer Vertikalebene ermöglicht.

15. Verwendung eines Anbaugerätes (100) mit einer als mobile Arbeitsmaschine (12) gestalteten mobilen Handhabungsvorrichtung (10) zur abtragenden oder glättenden Bearbeitung von Wänden (200, 202, 204) oder Decken (206),
wobei die Handhabungsvorrichtung (10) ein Fahrwerk (14) mit einem Fahrantrieb (62) und einen Aufbau (18) aufweist, der einen steuerbaren Ausleger (30) trägt,
wobei das Anbaugerät (100) an einer Anbauschnittstelle (38) am Ausleger (30) aufnehmbar ist und Folgendes aufweist:
- eine Montageeinheit (104) zur Aufnahme an der Anbauschnittstelle (38) der Handhabungsvorrichtung (10),
wobei die Montageeinheit (104) zumindest zwei zueinander versetzte Schwenkpositionen (190, 192, 194) für das Anbaugerät (100) bereitstellt, und
- einen Bearbeitungskopf (102), der mit zumindest einem Werkzeug zur abtragenden oder glättenden Bearbeitung bestückbar ist,
**gekennzeichnet durch**
- eine Kompensationsanordnung (106) zwischen der Montageeinheit (104) und dem Bearbeitungskopf (102), die eine Längsachse (246) definiert,
wobei der Bearbeitungskopf (102) relativ zur Montageeinheit (104) in einer Längsrichtung (160) entlang der Längsachse (246) verfahrbar ist,
wobei die Kompensationsanordnung (106) dazu ausgestaltet ist, in einem definierten Arbeitsbereich (172) entlang der Längsachse (246) eine definierte Anpresskraft für den Bearbeitungskopf (102) in Richtung auf die zu bearbeitende Oberfläche bereitzustellen,
wobei im Arbeitsbereich (172) der Kompensationsanordnung (106) Ausgleichsbewegungen entlang der Längsachse (246) von betragsmäßig mindestens 200 mm ermöglicht sind, und
wobei das Anbaugerät (100) unabhängig von Steuerbefehlen durch die Handhabungsvorrichtung (10) betreibbar und entlang einer zu bearbeitenden Oberfläche verfahrbar ist.

## Claims

1. A mobile handling device (10) that is arranged as a mobile work machine (12), the mobile handling device (10) comprising:
- an undercarriage (14) comprising a travel drive (62),
- a body (18) that supports a controllable boom (30), and
- an attachment (100) for material-removing processing or smoothing processing walls or ceilings,
wherein the attachment (100) is supported at a mounting interface (38) of the boom (30) and comprises:
- a mounting unit (104) for a mounting to the mounting interface (38) of the handling device (10),
wherein the mounting unit (104) provides at least two swivel positions (190, 192, 194) for the attachment (100) that are offset from one another, and
- a processing head (102) that is arranged to be equipped with at least one tool for material-removing processing or smoothing processing, **characterized by**
- a compensation arrangement (106) arranged between the mounting unit (104) and the processing head (102) and defining a longitudinal axis (246),
wherein the processing head (102) is movable relative to the mounting unit (104) in a longitudinal direction (160) along the longitudinal axis (246),
wherein the compensation arrangement (106) is arranged to provide a defined contact pressure force for the processing head (102) in a defined operating range (172) along the longitudinal axis (246) towards the surface to be processed,
wherein in the operating range (172) of the compensation arrangement (106), compensating movements along the longitudinal axis (246) of at least 200 mm, in terms of absolute value, are enabled, and
wherein the attachment (100) is operable independently of control commands from the handling device (10) and movable along a surface to be processed.

2. The handling device (10) according to claim 1, wherein in the operating range (172) the compensation arrangement (106) compensates for positional changes of the attachment interface (38) of the handling device (10) along the longitudinal axis (246).

3. The handling device (10) according to claim 1 or 2, wherein in the operating range (172) of the compensation arrangement (106), compensating movements along the longitudinal axis (246) of at least 300 mm, preferably at least 400 mm, in terms of absolute value are, enabled.

4. The handling device (10) according to one of claims 1 to 3, wherein the compensation arrangement (106) is operable in a first operating mode and at least one second operating mode, wherein the first operating mode considers a vertical orientation of the longitudinal axis (246), and wherein the at least one second operating mode considers a horizontal orientation of the longitudinal axis (246).

5. The handling device (10) according to one of claims 1 to 4, wherein the compensation arrangement (106) is regulated in such a way that a substantially constant contact pressure is available in the operating range (172), wherein a resulting contact pressure in the operating range (172) varies by a maximum of 15%, preferably by a maximum of 10%, more preferably by a maximum of 5%.

6. The handling device (10) according to any one of claims 1 to 5, wherein the compensation arrangement (106) comprises at least one working cylinder (250) extending in the longitudinal direction (160), wherein the working cylinder (250) is arranged to be connected to a pressure medium supply (64) of the handling device (10), wherein the regulation of an actual pressure in the working cylinder (250) at a present supply pressure is effected by a pressure regulation, which is provided in the attachment (100) itself.

7. The handling device (10) according to any one of claims 1 to 6, wherein the compensation arrangement (106) further comprises a longitudinal guide (230) for the processing head (102), which guides a movement of the processing head (102) in the longitudinal direction (160) independently of an actual orientation of the attachment (100), and wherein the longitudinal guide (230) is preferably arranged as a roller guide.

8. The handling device (10) according to claim 7, wherein the longitudinal guide (230) comprises a guide frame (232), in which a profile carriage (234) is arranged that is movable relative to the guide frame (232) and that is supported on the guide frame (232), and wherein the processing head (102) is arranged at one end of the profile carriage (234).

9. The handling device (10) according to any one of claims 1 to 8, wherein the compensation arrangement (106) further comprises a visual indicator (162) for visualization of a current working position of the processing head (102) in the operating range (172).

10. The handling device (10) according to any one of claims 1 to 9, wherein the processing head (102) is connected to one end of the compensation arrangement (106) via a joint arrangement (108), wherein at least one biasing element (148, 150) is provided, which urges the processing head (102) towards a desired orientation, and wherein the joint arrangement (108) is preferably arranged as a gimbal joint arrangement and provides two pivot axes (144, 146), which are oriented perpendicular to each other and perpendicular to the longitudinal axis (246).

11. The handling device (10) according to any one of claims 1 to 10, comprising:
- a pressure medium supply unit (64), and
- a control device (60),
wherein the compensation arrangement (106) is supplied with a pressure medium via the pressure medium supply unit (64),
wherein the control device (60) is adapted to guide the attachment (100) in a defined orientation relative to a wall (200, 202, 204) or ceiling (206) and to position the attachment interface (38) at a defined distance range from the wall (200, 202, 204) or ceiling (206) during a feed movement of the attachment (100) along the wall (200, 202, 204) or ceiling (206) that is controlled by operator commands, and
wherein the compensation arrangement (106) provides the contact pressure force for the processing head (102) towards the surface to be processed, with the attachment (100) being supported on the handling device (10).

12. The handling device (10) according to claim 11, wherein the body (18) is rotatable relative to the undercarriage (14), wherein the boom (30) comprises a first arm section (32), a second arm section (34) and a third arm section (36) forming an open chain and being pivotable relative to each other, wherein the first arm section (32) is pivotally mounted to the body (18), wherein the third arm section (36) supports the mounting interface (38), which is accommodated pivotably on the third arm section (36), wherein pivot axes (42, 44, 46, 48) of the arm sections (32, 34, 36) of the boom (30) are respectively oriented parallel to one another and perpendicularly to a rotation axis (22) of the body (18) relative to the undercarriage (14), and wherein drives (20, 50, 52, 54, 56) are associated with the pivot axes (42, 44, 46, 48) and the rotation axis (22) and can be controlled via the control device (60).

13. The handling device (10) according to claim 11 or 12, wherein the mounting interface (38) is pivotable about a pivot axis (48) to ensure a parallel orientation of the processing head (102) relative to the wall (200, 202, 204) or ceiling (206).

14. The handling device (10) according to claim 12 or 13, wherein the control device (60) is operable at least in a horizontal mode or a vertical mode, wherein the control device (60) in the horizontal mode controls the drives of the handling device (10) in such a way that the attachment (100) is moved along a horizontal path, wherein the control device (60) in the vertical mode controls the drives of the handling device (10) in such a way that the attachment (100) is moved along a vertical path, and wherein the control device (60) enables movements of the attachment (100) in a horizontal plane in the horizontal mode and enables movements of the attachment (100) in a vertical plane in the vertical mode.

15. A use of an attachment (100) with a handling device (10) that is arranged as a mobile work machine (12) for material-removing processing or smoothing processing walls (200, 202, 204) or ceilings (206),
wherein the handling device (10) comprises an undercarriage (14) comprising a travel drive (62), and a body (18) that supports a controllable boom (30),
wherein the attachment (100) is arranged to be supported at a mounting interface (38) at the boom (30) and comprises:
- a mounting unit (104) for a mounting to the mounting interface (38) of the handling device (10),
wherein the mounting unit (104) provides at least two swivel positions (190, 192, 194) for the attachment (100) that are offset from one another, and
- a processing head (102) that is arranged to be equipped with at least one tool for material-removing processing or smoothing processing,
**characterized by**
- a compensation arrangement (106) arranged between the mounting unit (104) and the processing head (102) and defining a longitudinal axis (246),
wherein the processing head (102) is movable relative to the mounting unit (104) in a longitudinal direction (160) along the longitudinal axis (246),
wherein the compensation arrangement (106) is arranged to provide a defined contact pressure force for the processing head (102) in a defined operating range (172) along the longitudinal axis (246) towards the surface to be processed,
wherein in the operating range (172) of the compensation arrangement (106), compensating movements along the longitudinal axis (246) of at least 200 mm, in terms of absolute value, are enabled, and
wherein the attachment (100) is operable independently of control commands from the handling device (10) and movable along a surface to be processed.

## Revendications

1. Dispositif de manipulation (10) mobile, conçu sous la forme d'un engin de travail mobile (12), qui présente les éléments suivants :
- un châssis (14) équipé d'un ensemble d'entraînement en déplacement (62),
- une structure (18) portant une flèche (30) apte à être commandée, et
- un équipement porté (100) pour le traitement d'enlèvement ou de lissage de parois ou de plafonds,
l'équipement porté (100) étant reçu sur une interface de montage (38) sur la flèche (30) et comprenant ce qui suit :
- une unité de montage (104) destinée à être reçue sur l'interface de montage (38) du dispositif de manipulation (10),
l'unité de montage (104) fournissant au moins deux positions de pivotement (190, 192, 194) décalées l'une par rapport à l'autre pour l'équipement porté (100), et
- une tête de traitement (102) qui est apte à être équipée d'au moins un outil pour un traitement d'enlèvement ou de lissage,
**caractérisé par**
- un agencement de compensation (106) entre l'unité de montage (104) et la tête de traitement (102), qui définit un axe longitudinal (246),
la tête de traitement (102) étant apte à être déplacée par rapport à l'unité de montage (104) dans une direction longitudinale (160) le long de l'axe longitudinal (246),
l'agencement de compensation (106) étant conçu de façon à fournir, dans une zone de travail définie (172) le long de l'axe longitudinal (246), une force de pression définie pour la tête de traitement (102) en direction de la surface à traiter,
des mouvements de compensation le long de l'axe longitudinal (246) d'une valeur d'au moins 200 mm étant possibles dans la zone de travail (172) de l'agencement de compensation (106), et
l'équipement porté (100) étant apte à être actionné par le dispositif de manipulation (10) indépendamment d'instructions de commande et étant apte à être déplacé le long de la surface à traiter.

2. Dispositif de manipulation selon la revendication 1, dans lequel l'agencement de compensation (106) compense, dans la zone de travail (172), les modifications de position de l'interface de montage (38) du dispositif de manipulation (10) le long de l'axe longitudinal (246).

3. Dispositif de manipulation selon la revendication 1 ou la revendication 2, dans lequel des mouvements de compensation le long de l'axe longitudinal (246) d'une valeur d'au moins 300 mm, de préférence d'au moins 400 mm, sont possibles dans la zone de travail (172) de l'agencement de compensation (106).

4. Dispositif de manipulation selon l'une des revendications 1 à 3, dans lequel l'agencement de compensation (106) est apte à fonctionner selon un premier mode de fonctionnement et au moins un deuxième mode de fonctionnement, le premier mode de fonctionnement prenant en compte une orientation verticale de l'axe longitudinal (246) et ledit au moins un deuxième mode de fonctionnement prenant en compte une orientation horizontale de l'axe longitudinal (246).

5. Dispositif de manipulation selon l'une des revendications 1 à 4, dans lequel l'agencement de compensation (106) est régulé de telle sorte qu'une force de pression sensiblement constante soit disponible dans la zone de travail (172), avec pour conséquence une force de pression dans la zone de travail (172) variant d'un maximum de 15 %, de préférence d'un maximum de 10%, de façon encore préférée d'un maximum de 5%.

6. Dispositif de manipulation selon l'une des revendications 1 à 5, dans lequel l'agencement de compensation (106) comprend au moins un vérin de travail (250) qui s'étend dans la direction longitudinale (160), le vérin de travail (250) étant apte à être raccordé à une alimentation (64) en fluide sous pression du dispositif de manipulation (10), la régulation d'une pression réelle dans le vérin de travail (250) pour une pression d'alimentation donnée étant réalisée par un régulateur de pression qui est prévu sur l'équipement porté (100) lui-même.

7. Dispositif de manipulation selon l'une des revendications 1 à 6, dans lequel l'agencement de compensation (106) comprend en outre un guidage longitudinal (230) pour la tête de traitement (102), qui guide un mouvement de la tête de traitement (102) dans la direction longitudinale (160) indépendamment d'une orientation actuelle de l'outil porté (100), et dans lequel le guidage longitudinal (230) est de préférence conçu sous la forme d'un guidage à rouleaux.

8. Dispositif de manipulation selon la revendication 7, dans lequel le guidage longitudinal (230) comprend un châssis de guidage (232) dans lequel est monté un chariot profilé (234) déplaçable par rapport au châssis de guidage (232), qui s'appuie sur le châssis de guidage (232), et dans lequel la tête de traitement (102) est montée à une extrémité du chariot profilé (234).

9. Dispositif de manipulation selon l'une des revendications 1 à 8, dans lequel l'agencement de compensation (106) comprend en outre un indicateur visuel (162) pour illustrer une position de travail actuelle de la tête de traitement (102) dans la zone de travail (172).

10. Dispositif de manipulation selon l'une des revendications 1 à 9, dans lequel la tête de traitement (102) est reliée à une extrémité de l'agencement de compensation (106) par un ensemble articulé (108), au moins un élément de sollicitation (148, 150) étant prévu, qui pousse la tête de traitement (102) vers une orientation souhaitée, et l'agencement d'articulation (108) étant de préférence conçu sous la forme d'un agencement d'articulation à cardan et fournissant deux axes de pivotement (144, 146) qui sont orientés perpendiculairement l'un à l'autre et perpendiculairement à l'axe longitudinal (246).

11. Dispositif de manipulation selon l'une des revendications 1 à 10, comprenant :
- une unité (64) d'alimentation en fluide sous pression, et
- un dispositif de commande (60),
l'agencement de compensation (106) étant alimenté en fluide sous pression par l'unité (64) d'alimentation en fluide sous pression,
le dispositif de commande (60) étant conçu pour guider l'équipement porté (100) dans une orientation définie par rapport à une paroi (200, 202, 204) ou à un plafond (206) et, pendant un mouvement d'avance de l'équipement porté (100) le long de la paroi (200, 202, 204) ou du plafond (206), qui est commandé par des instructions de l'opérateur, pour positionner l'interface de montage (38) dans une gamme de distance définie par rapport à la paroi (200, 202, 204) ou au plafond (206), et l'agencement de compensation (106) fournissant la force de pression pour la tête de traitement (102) en direction de la surface à traiter et l'équipement porté (100) s'appuyant alors sur le dispositif de manipulation (10).

12. Dispositif de manipulation (10) selon la revendication 11, dans lequel la structure (18) est apte à tourner par rapport au châssis (14), la flèche (30) présentant une première partie de bras (32), une deuxième partie de bras (34) et une troisième partie de bras (36) qui forment une chaîne ouverte et sont aptes à pivoter les unes par rapport aux autres, la première partie de bras (32) étant reçue de manière pivotante sur la structure (18), la troisième partie de bras (36) portant l'interface de montage (38), qui est reçue de manière pivotante sur la troisième partie de bras (36), des axes de pivotement (42, 44, 46, 48) des parties de bras (32, 34, 36) de la flèche (30) étant orientés chacun parallèlement les uns aux autres et perpendiculairement à un axe de rotation (22) de la structure (18) par rapport au châssis (14), et des systèmes d'entraînement (20, 50, 52, 54, 56) étant associés aux axes de pivotement (42, 44, 46, 48) et à l'axe de rotation (22), lesquels sont aptes à être commandés par l'intermédiaire du dispositif de commande (60).

13. Dispositif de manipulation (10) selon la revendication 11 ou la revendication 12, dans lequel l'interface de montage (38) est apte à pivoter autour d'un axe de pivotement (48) afin d'assurer une orientation parallèle de la tête de traitement (102) par rapport à la paroi (200, 202, 204) ou au plafond (206).

14. Dispositif de manipulation (10) selon la revendication 12 ou la revendication 13, dans lequel le dispositif de commande (60) est apte à être exploité au moins dans un mode horizontal ou un mode vertical, le dispositif de commande (60) commandant en mode horizontal les systèmes d'entraînement du dispositif de manipulation (10) de telle sorte que l'équipement porté (100) soit déplacé le long d'une trajectoire horizontale, le dispositif de commande (60) commandant, en mode vertical, les systèmes d'entraînement du dispositif de manipulation (10) de telle sorte que l'équipement porté (100) soit déplacé le long d'une trajectoire verticale, et le dispositif de commande (60) permettant, en mode horizontal, des mouvements de l'équipement porté (100) dans un plan horizontal et permettant, en mode vertical, des mouvements de l'équipement porté (100) dans un plan vertical.

15. Utilisation d'un équipement porté (100) avec un dispositif de manipulation (10) mobile conçu comme une machine de travail mobile (12) pour le traitement d'enlèvement ou de lissage de parois (200, 202, 204) ou de plafonds (206),
le dispositif de manipulation (10) présentant un châssis (14) avec un système d'entraînement de déplacement (62) et une structure (18) qui porte une flèche (30) apte à être commandée, l'équipement porté (100) étant apte à être reçu sur une interface de montage (38) sur la flèche (30) et présentant ce qui suit :
- une unité de montage (104) destinée à être reçue sur l'interface de montage (38) du dispositif de manipulation (10),
l'unité de montage (104) fournissant au moins deux positions de pivotement (190, 192, 194) décalées l'une par rapport à l'autre pour l'équipement porté (100), et
- une tête de traitement (102) qui est apte à être équipée d'au moins un outil pour un traitement d'enlèvement ou de lissage,
**caractérisé par**
- un agencement de compensation (106) entre l'unité de montage (104) et la tête de traitement (102), qui définit un axe longitudinal (246),
la tête de traitement (102) étant apte à être déplacée par rapport à l'unité de montage (104) dans une direction longitudinale (160) le long de l'axe longitudinal (246),
l'agencement de compensation (106) étant conçu de façon à fournir, dans une zone de travail définie (172) le long de l'axe longitudinal (246), une force de pression définie pour la tête de traitement (102) en direction de la surface à traiter,
des mouvements de compensation le long de l'axe longitudinal (246) d'une valeur d'au moins 200 mm étant possibles dans la zone de travail (172) de l'agencement de compensation (106), et
l'équipement porté (100) étant apte à être actionné par le dispositif de manipulation (10) indépendamment d'instructions de commande et étant apte à être déplacé le long d'une surface à traiter.
